# EUROPÄISCHE PATENTANMELDUNG

(11) **EP 4 001 328 A1**
(43) Veröffentlichungstag der Anmeldung: **25.05.2022**
(21) Anmeldenummer: 20209550.1
(22) Anmeldetag: 24.11.2020
(51) Int. Cl.: C08F 222/10, C08F 265/06, C08F 283/00, C08F 290/06, C08F 290/14

(54) **POLYMERISIERBARE ZUSAMMENSETZUNG ZUR BONDIERUNG VON FASEREINHEITEN**

(71) Anmelder: Rudolf GmbH, 82538 Geretsried (DE)
(72) Erfinder: SINGH, Raman Paul, 82538 Geretsried (DE); SIELEMANN, Dirk, 82515 Wolfratshausen (DE); HUBER, Ludwig, 80638 München (DE)
(74) Vertreter: Weickmann, Hans

(57) **Zusammenfassung**

Die vorliegende Erfindung betrifft eine polymerisierbare Zusammensetzung zur Bondierung von Fasereinheiten, insbesondere linienförmiger Textilien wie Filamenten, Garnen, Zwirnen oder Seilen, umfassend mindestens ein Präpolymer mit mindestens zwei polymerisierbaren Vinyliden-Gruppen, wie ein Polyurethan mit mindestens zwei (Meth)acrylat-Gruppen, mindestens einen Photoinitiator und mindestens eine Verbindung mit mindestens einer polymerisierbaren Vinyliden-Gruppe mit einem gewichtsmittleres Molekulargewicht von 70-800 g/mol. Zudem betrifft die vorliegende Erfindung ein Verfahren zur Bondierung von Fasereinheiten, umfassend Applizieren der erfindungsgemäßen Zusammensetzung auf mindestens eine Fasereinheit wie einem Filament, Garn, Zwirn oder Seil und Bestrahlen der so erhaltenen Fasereinheit mit Strahlung einer Wellenlänge im Bereich von z.B. 100-450 nm.

## Beschreibung

### Gegenstand der Erfindung

Die vorliegende Erfindung betrifft eine polymerisierbare Zusammensetzung zur Bondierung von Fasereinheiten, insbesondere linienförmiger Textilien wie Filamenten, Garnen, Zwirnen oder Seilen, umfassend mindestens ein Präpolymer mit mindestens zwei polymerisierbaren Vinyliden-Gruppen, mindestens einen Photoinitiator, und mindestens eine Verbindung mit mindestens einer polymerisierbaren Vinyliden-Gruppe, die ein gewichtsmittleres Molekulargewicht M_{w} von 70-800 g/mol aufweist.

Die Erfindung betrifft ferner ein Polymer, erhältlich durch Polymerisieren, insbesondere durch Bestrahlen, der erfindungsgemäßen Zusammensetzung.

Zudem betrifft die vorliegende Erfindung ein Verfahren zur Bondierung von Fasereinheiten, insbesondere linienförmiger Textilien, umfassend Applizieren der erfindungsgemäßen Zusammensetzung auf mindestens eine Fasereinheit wie ein Filament, Garn, Zwirn oder Seil und Bestrahlen der so erhaltenen Fasereinheit.

### Stand der Technik

Handelsübliche Nähgarne werden durch Verzwirnung bzw. Verdrillung vieler einzelner Fäden oder Filamente zu einem Fadenbündel bzw. Multifilament mit helixähnlichem Aufbau hergestellt. Hierbei ergeben sich üblicherweise Windungszahlen von ca. 1000 bis 10000 Windungen pro Meter Nähfaden.

In einigen Fällen weist ein solcher Nähfaden einen Kern auf, auch Seele genannt, der aus jedem geeigneten zugfesten Material bestehen kann, welches mit dem Material der verzwirnten bzw. verdrillten Fäden oder Filamente kompatibel ist.

Die Fäden oder Filamente können beispielsweise aus Baumwolle, Wolle, Seide, Viskose, Polyester, Polyamid, Polyurethan, Polypropylen, Polyethylen, Polyacrylnitril und/oder Polytetrafluorethylen bestehen. Die Seele bzw. der Kern kann Baumwolle, Elastan, Kevlar, Kohle- und/oder Glasfaser enthalten. Die Seele kann bevorzugt das gleiche Material umfassen wie die Fäden oder Filamente.

Im kontinuierlichen Nähbetrieb werden Nähgarne maschinell bei bis zu 300 Nähhüben pro Minute vernäht. Dabei neigen herkömmliche Garne bzw. Nähfäden durch wechselnde Nachreichung und häufig variierende Fadenspannung zu einer Entzwirnung, d.h. sie weisen sich vom Hauptstrang des Nähfadens ablösende Fäden/Filamente auf. Aus diesen abgelösten Fäden/Filamenten können sich Schlingen bzw. Schlaufen bilden und bedingt durch die Nadelreibung auch Spliss des Garns. Diese Defekte können beim weiteren Vernähen von der Nähmaschinennadel erfasst werden und zu unregelmäßigen, minderwertigen Nähten führen. Häufig tritt sogar Fadenriss und Nadelbruch als Folge eines derartigen Entzwirnungsvorganges auf. Daneben können Nähfäden bei Kettstichnähten an ihren Enden auch aufgrund der beim Nähprozess herrschenden Torsionsspannung aufdrillen.

Um die genannten Probleme zu reduzieren, sind verschiedene Lösungsansätze beschrieben. Ziel dabei ist es, die einzelnen Filamente/Fäden miteinander zu verkleben (durch sogenannte Bondierung des Garns), um ein Garn zu erhalten, das den hohen mechanischen Belastungen beim Vernähen standhält, aber dennoch eine gute Verarbeitbarkeit aufweist.

DE 37 17 921 A1 betrifft ein Garn, das mit Hilfe eines Schmelzklebefadens bondiert ist, um eine Haftung der einzelnen Filamente/Fasern untereinander und damit einen Faserverbund zu erhalten. DE 43 27 783 A1 betrifft einen Nähfaden, der zunächst mit einer wässrigen, filmbildenden Polymerdispersion oder -lösung behandelt wird. Die nach thermischer Trocknung verbleibenden Polymere verkleben die Filamente/Fasern zu einem Faserverbund. Auch die Applikation wässriger Polyurethandispersionen ist bekannt.

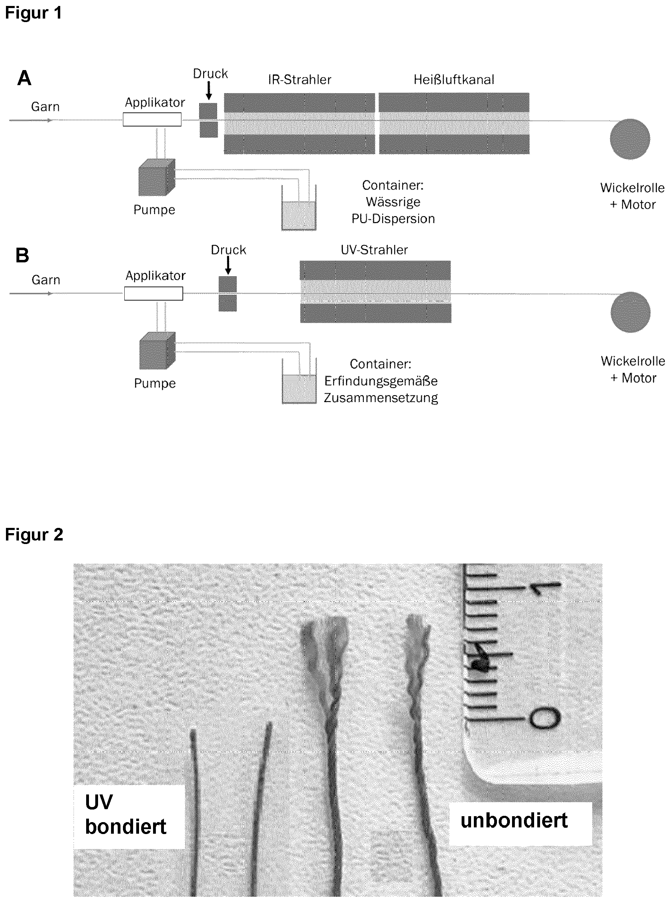

Ein Problem bei der Ausrüstung aus dem wässrigen Medium ist die Notwendigkeit, das Wasser durch thermische Behandlung zu entfernen. Die Trocknung verursacht hohe Energiekosten, einen hohen Wasserverbrauch, sowie einen hohen Flächenverbrauch für die benötigte Anlagentechnik (vgl. Figur 1A). Zudem ist die Applikation auf thermisch labilen Garnen aufgrund der benötigten hohen Trocknungstemperaturen oft nicht möglich.

Ein weiteres Problem bei der Verwendung wässriger Polymerdispersionen, insbesondere auf Basis von Polyurethanen, stellt sich dar, indem das Polymer bei der Verdampfung des Wassers an die Garnoberfläche migriert. Dabei entsteht zunächst ein Polymerfilm an der Oberfläche, der das Garn umhüllt und das weitere Verdampfen des Wassers behindert. Bei anschließendem Wasserdampfaustritt entstehen Bläschen an der Garnoberfläche, die teilweise aufplatzen und bei vollständiger Trocknung Defekte, wie Unebenheiten und kleine Partikel auf der bondierten Garnoberfläche bilden. Dieses sogenannte "Cratering" führt zu nachteiligen Eigenschaften für das bondierte Garn. Zum einen sorgen die Mikropartikel an der Oberfläche für eine erhöhte Reibung und zum anderen wird Polymermaterial, das sich an der Oberfläche befindet, beim anschließenden Vernähen abgetragen. Dem Fachmann ist dieser Abrieb als "Snowing-Effekt" bekannt.

Ferner wird bei einer Applikation aus dem wässrigen Medium nicht die gesamte Menge des applizierten Polymers für die Bondierung genutzt, da das Polymermaterial nicht über den gesamten Querschnitt des Garns verteilt wird, sondern sich aufgrund von z.B. oben beschriebenen Migrationseffekten zum Großteil an der Garnoberfläche befindet und somit nur geringfügig zur Verklebung der Fasern/Filamente des Garns beiträgt.

Durch eine Optimierung der Applikationsparameter, wie Flottenkonzentration, Garngeschwindigkeit in der Bondierungsvorrichtung, Trocknertemperatur, Trocknerlänge, Luftfeuchtigkeit und Ventilationsvolumina können die vorgehend beschriebenen Probleme zwar reduziert, aber nicht vollständig vermieden werden. Zudem ist die Optimierung schwierig und zeitaufwendig und muss für jedes Garn und jede Polymerdispersion individuell erfolgen.

WO 2018/130586 A1 beschreibt lösungsmittelhaltige Beschichtungen basierend auf Polyurethanharnstoffen für textile Materialien wie Naturfasern. Allerdings sind bereits geringe Mengen an organischen Lösungsmitteln auf Textilien nicht erwünscht.

In US 6,436,484 B1 wird ein Verfahren zur Beschichtung von Nähgarn beschrieben. Das Verfahren umfasst die Applikation einer lösungsmittelfreien, strahlungshärtbaren Zusammensetzung enthaltend ein cycloaliphatisches Epoxid und einen Photoinitiator. Nach Bestrahlung der Zusammensetzung wird ein Proton generiert, das eine kationische Polymerisation auslöst. Epoxid-Bondierungen haben jedoch den Nachteil, dass sie vergleichsweise lange zur Aushärtung benötigen und bei einer unvollständigen Aushärtung zu einem Verkleben des bondierten Garns im aufgewickelten Zustand führen. Zudem sind die eingesetzten Photoinitiatoren sehr empfindlich gegenüber Verunreinigungen auf dem zu applizierenden Substrat, sodass die Polymerisation unter Umständen unvollständig abläuft. Des Weiteren ist eine getrennte Lagerung von Photoinitiator und Polymer erforderlich.

Aufgabe der vorliegenden Erfindung ist es daher, eine verbesserte Bondierung für Fasereinheiten wie Nähgarne zur Verfügung zu stellen, die die Nachteile des Standes der Technik überwindet. Insbesondere wird eine homogenere Verteilung der Bondierungszusammensetzung auf und in der Fasereinheit gewährleistet. Die Bondierungszusammensetzung kann durch ein einfaches, schnelles und kostengünstiges Verfahren appliziert werden und weist keine nachteiligen Effekte wie "Cratering" und im Wesentlichen kein "Snowing" auf.

Gelöst wurde diese Aufgabe durch die erfindungsgemäße Zusammensetzung, umfassend (i) mindestens ein Präpolymer mit mindestens zwei polymerisierbaren Vinyliden-Gruppen, (ii) mindestens einen Photoinitiator, und (iii) mindestens eine Verbindung mit mindestens einer polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

Die Zusammensetzung eignet sich zur Bondierung von Fasereinheiten wie Filamenten, Garnen, Zwirnen oder Seilen mittels Photopolymerisation. Somit kann der nachteilhafte Einsatz von Wasser und/oder organischen Lösungsmitteln sowie die damit einhergehenden negativen Auswirkungen auf die Eigenschaften der bondierten Fasereinheit vermieden werden.

Durch die Applikation von bevorzugt wasser- und lösungsmittelfreien, photopolymerisierbaren Zusammensetzungen auf Fasereinheiten wie Garnen mit anschließender Bestrahlung können bondierte Fasereinheiten hergestellt werden, die kein "Cratering" aufweisen, eine hohe mechanische Festigkeit besitzen und sich durch sehr gute Näheigenschaften auszeichnen. Die mechanische Festigkeit ist insbesondere dadurch gewährleistet, dass die Bondierung der Faser die Reibung innerhalb des Nähprozesses verringert und es so zu weniger Faserbrüchen kommt. Außerdem werden deutlich höhere Auflagemengen der Bondierungszusammensetzung ermöglicht, so dass die gewünschte Stabilität des Garns beliebig eingestellt werden kann.

Zudem ermöglicht die erfindungsgemäße Zusammensetzung eine Bondierung von hitzeempfindlichen Garnen, da keine thermische Trocknung des Garns erfolgen muss, die in der Regel bei Temperaturen von über 150°C stattfindet.

Die erfindungsgemäße Zusammensetzung besitzt eine niedrige Viskosität, die ein einfaches Handhaben der Zusammensetzung und eine gute Applikation ermöglicht, eine hohe Reaktivität sowie ein verbessertes Penetrationsverhalten in den Faserverbund erlaubt, so dass auch im Inneren der Fasereinheit eine gute Haftung zwischen den einzelnen Fasern bzw. Filamenten erzielt werden kann.

Ferner wird der Verbrauch an Wasser und Energie deutlich reduziert, da kein aufwendiger Trocknungsprozess notwendig ist. Zudem kann mit höheren Prozessgeschwindigkeiten gearbeitet werden, so dass im Vergleich zu langsamen thermischen Trocknungsprozessen die Produktivität deutlich gesteigert wird.

### Definitionen

Hierin bezeichnet der Begriff "Bondieren" oder "Bondierung" die Verklebung und Beschichtung einer Fasereinheit, insbesondere eines linienförmigen Textils wie eines Filaments, Garns, Zwirns oder Seils. Das Bondieren bewirkt eine Verfestigung gegenüber der mechanischen Beanspruchung bei der Verarbeitung der Fasereinheit. Insbesondere kann ein Entzwirnen bei Nähprozessen verhindert werden.

"Cratering" bezeichnet Defekte auf der bondierten Garnoberfläche wie z.B. Unebenheiten und kleine Partikel.

Unter "Fasern" werden Naturfasern sowie Kunstfasern und Mischformen verstanden. "Naturfasern" bestehen aus natürlich vorkommenden Materialien und umfassen bevorzugt Baumwolle, Wolle, Leinen und/oder Seide. "Synthetische Fasern" oder auch "Kunstfasern" genannt werden synthetisch aus natürlichen, wie z. B. bei zellulosischen (Chemie)Fasern, und/oder synthetischen Polymeren hergestellt und umfassen bevorzugt Polymere wie Polyester, Polyolefin, z.B. Polyethylen oder Polypropylen, bevorzugt Polypropylen, Polyamid, Polyaramid, wie z.B. Kevlar^{®} und Nomex^{®}, Polyacrylnitril, Elasthan und/oder Viskose. Mischformen umfassen Natur- und Kunstfasern.

"Fasereinheit" bezeichnet ein Filament, Garn, Zwirn oder Seil. Diese können aus den genannten Fasern bestehen.

Unter einer "gleichmäßigen Verteilung" der applizierten Zusammensetzung längs ihres Querschnitts wird verstanden, dass das Faserinnere im Wesentlichen die gleiche Massenmenge Bondierungszusammensetzung aufweist wie das Faseräußere.

Unter "Inertatmosphäre" wird eine gasförmige Atmosphäre verstanden, die auch unter harschen Bedingungen, z.B. bei erhöhter Temperatur und energiereicher Bestrahlung, nicht mit den Beschichtungsmassen reagiert und deren Aushärtung nicht beeinflusst. Insbesondere wird darunter eine Atmosphäre mit niedrigem Sauerstoffgehalt, von bevorzugt 0,01-5 Vol.-% verstanden. Eine geeignete Inertatmosphäre umfasst beispielsweise Stickstoff oder Argon.

"Filament" ist die Bezeichnung für eine Faser mit einem Länge/Breite-Verhältnis von größer 3. Die Länge des Filaments ist bevorzugt mindestens 10m, stärker bevorzugt mindestens 1000 m. Filamente können als Monofilament oder als Polyfilament vorliegen. Monofilamente bestehen aus einer einzelnen Faser. Polyfilamente bestehen aus mindestens 2 Monofilamenten, insbesondere mindestens 10 Monofilamenten und bevorzugt 30-100 Monofilamenten.

"Frei von Lösungsmitteln" oder "im Wesentlichen frei von Lösungsmitteln" bedeutet, dass die Zusammensetzung weniger als 10 Gew.-%, insbesondere 0.001 - 5 Gew.-%, vorzugsweise weniger als 2 Gew.-% Lösungsmittel in Bezug auf das Gesamtgewicht der Zusammensetzung aufweist. Lösungsmittel im Sinne der vorliegenden Erfindung sind insbesondere Verbindungen, die nicht zur chemischen Molekülstruktur des erfindungsgemäßen Polymers beitragen.

"Garne" bestehen aus mehreren Fasern, die verdrillt sein können, und "Zwirne" entstehen durch das Zusammendrehen von mindestens zwei Garnen.

"Linienförmige Textilien" bezeichnen Filamente, Garne, wie z. B. Effektgarne, einfache Garne, texturierte Garne, gefachte Garne, Spinnfasergarne, Rotorgarne, Dreizylindergarne, Kammgarne, Halbkammgarne, Streichgarne, Schappegarne, Bourettegarne und Filamentgarne wie Multifilgarne und Monofilgarne, Zwirne wie z. B. Effektzwirne, einstufige Zwirne, mehrstufige Zwirne, Umspinnungszwirne und Endloszwirne, Seile, Fasern, wie z. B. Stapelfasern und Faserbündel, und Haspelseide aus natürlichem Material, halbsynthetischen Material, synthetischem Material oder einer Mischung davon.

Der Ausdruck "(Meth)acrylat" steht für "Acrylat oder Methacrylat".

"Seil" bezeichnet ein Element aus Natur- und/oder Kunstfasern, die zusammengedreht und/oder geflochten sind, wobei das Seil auf Zugkraft beansprucht werden kann und bevorzugt einen Durchmesser von 1-10 mm, beispielsweise bis etwa 5 mm besitzt.

Als "Photoinitiator" wird eine Verbindung verstanden, die unter Strahlungseinwirkung Radikale bildet, welche eine radikalische Polymerisation starten können.

Unter "Photopolymerisation" wird die Polymerisation polymerisierbarer Verbindungen mit Hilfe von elektromagnetischer Strahlung, bevorzugt UV-Licht im Wellenlängenbereich von 100 bis 450 nm, verstanden. Die üblicherweise zur Vernetzung eingesetzte Strahlungsdosis bei einer Photopolymerisation liegt im Bereich von 80 - 3000 mJ/cm².

"Photopolymerisierbare Verbindungen" sind Verbindungen mit einer oder mehreren photopolymerisierbaren Gruppen, insbesondere ethylenisch ungesättigten Gruppen wie Vinyliden-Gruppen. Photopolymerisierbare Verbindungen polymerisieren unter Einwirkung photochemisch erzeugter Radikale (siehe oben).

Ein "Polymerisationsinhibitor" bezeichnet eine Verbindung, die die Autopolymerisation von Monomeren unterbindet, indem sie mit reaktiven Radikalen inaktive Radikale bildet. Sie erhöht dadurch die Lagerstabilität von radikalisch polymerisierbaren Stoffen und Stoffgemischen.

"Reaktivverdünner" oder "reaktives Verdünnungsmittel" bezeichnet eine Verbindung, die die Viskosität einer Zusammensetzung herabsetzt und bei einer Polymerisierung der Zusammensetzung Teil des Polymers wird.

Ein "Präpolymer" entsprechend der Erfindung ist ein Polymer oder Oligomer, das in der Lage ist, über mindestens zwei polymerisierbare Gruppen in eine Polymerisation einzutreten und dadurch mehr als eine Monomereinheit zu dem resultierenden Polymer beizutragen.

Ein "Oligomer" entsprechend der Erfindung ist ein Molekül, das mindestens 2 Monomereinheiten umfasst. Die Monomereinheiten können identisch oder verschieden sein.

"Wasserfrei" oder "im Wesentlichen wasserfrei" bedeutet, dass die Zusammensetzung weniger als 10 Gew.-%, insbesondere 0.001 - 5 Gew.-%, vorzugsweise weniger als 2 Gew.-% Wasser in Bezug auf das Gesamtgewicht der Zusammensetzung aufweist.

### Figuren

**Figur 1** ist eine schematische Darstellung von Garnbondierungsverfahren. In **Figur 1A** ist die Applikation einer wässrigen Bondierungszusammensetzung nach dem Stand der Technik auf ein Garn mit anschließender thermischer Trocknung durch IR-Strahlung und Heißluft dargestellt. In **Figur 1B** ist die Applikation einer erfindungsgemäßen Zusammensetzung mit photopolymerisierbaren Verbindungen auf ein Garn dargestellt, wobei kein Trocknungsschritt durch IR-Strahlung und/oder Heißluft benötig wird.
**Figur 2** zeigt die geschnittenen Enden eines unbondierten Garns und eines mit der erfindungsgemäßen Zusammensetzung bondierten Garns.
**Figur 3** zeigt den Aufbau eines Abrasionstests. Ein Motor (M) lässt das Garn über einen abrasiven Metallstab (A) vor und zurückgleiten, wobei das Garn am losen Ende mit einem Gewicht (G) von 150 g befestigt ist.
**Figur 4** zeigt die geschnittenen Enden eines unbondierten Garns, eines mit der erfindungsgemäßen Zusammensetzung bondierten Garns und eines mit der erfindungsgemäßen Zusammensetzung bondierten Garns nach Durchführung eines Abrasionstests .
**Figur 5** zeigt die Oberfläche eines unbondierten Garns (oben), eines mit einer wässrigen PU Dispersion bondierten Garns (Mitte) und eines mit der erfindungsgemäßen Zusammensetzung bondierten Garns (unten).
**Figur 6** zeigt ein mit der erfindungsgemäßen Zusammensetzung bondiertes Garn (links), und ein mit einer wässrigen PU Dispersion bondiertes Garn (rechts). Im rechten Bild sind deutlich Spuren von Cratering zu erkennen.

### Detaillierte Beschreibung der Erfindung

Die vorliegende Erfindung betrifft eine Zusammensetzung umfassend:
(i) mindestens ein Präpolymer mit mindestens zwei polymerisierbaren Vinyliden-Gruppen,
(ii) mindestens einen Photoinitiator, und
(iii) mindestens eine Verbindung mit mindestens einer polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

Die mindestens zwei polymerisierbaren Vinyliden-Gruppen eines Präpolymers der Komponente (i) sind bevorzugt photopolymerisierbar und können jeweils unabhängig voneinander ausgewählt sein aus einer (Meth)acrylat-, Vinyl- sowie Allylgruppe. In einer Ausführungsform sind die mindestens zwei polymerisierbaren Vinyliden-Gruppen eines Präpolymers der Komponente (i) jeweils unabhängig voneinander ausgewählt aus einer vinylidengruppenhaltigen Carbonsäure-, Carbonsäure-ester- oder Carbonsäure-amid-Gruppe, wie einer (Meth)acrylsäure-, Crotonsäure-, Itaconsäure-, Fumarsäure-, Maleinsäure-, Acrylamidoglycolsäure-, Methacrylamidoglycolsäure-Gruppe und Estern oder Amiden davon und insbesondere aus einer (Meth)acrylsäure-ester-Gruppe und (Meth)acrylsäure-amid-Gruppe, wie einer Crotonsäure-, Itaconsäure-, Fumarsäure-, Maleinsäure-, Acrylamidoglycolsäure- und Methacrylamidoglycolsäure-Ester- oder -Amid-Gruppe. In einer bevorzugten Ausführungsform sind die mindestens zwei polymerisierbaren Vinyliden-Gruppen in einem Präpolymer der Komponente (i) (Meth)acrylatgruppen.

Die erfindungsgemäße Zusammensetzung umfasst mindestens ein Präpolymer mit mindestens zwei polymerisierbaren Vinyliden-Gruppen (Komponente (i)). In einer bevorzugten Ausführungsform umfasst Komponente (i) mindestens zwei, bevorzugt 2-5, insbesondere zwei verschiedene Präpolymere mit mindestens zwei polymerisierbaren Vinyliden-Gruppen.

Die mindestens eine polymerisierbare Vinyliden-Gruppe einer Verbindung der Komponente (iii) ist bevorzugt photopolymerisierbar und kann jeweils unabhängig ausgewählt sein aus einer (Meth)acrylat-, Vinyl- sowie Allylgruppe. In einer Ausführungsform ist die mindestens eine polymerisierbare Vinyliden-Gruppe einer Verbindung der Komponente (iii) ausgewählt aus einer vinylidengruppenhaltigen Carbonsäure-, Carbonsäure-ester- oder Carbonsäureamid-Gruppe, wie einer (Meth)acrylsäure-, Crotonsäure-, Itaconsäure-, Fumarsäure-, Maleinsäure-, Acrylamidoglycolsäure-, Methacrylamidoglycolsäure-Gruppe und Estern oder Amiden davon und insbesondere aus einer (Meth)acrylsäure-ester-Gruppe und (Meth)acrylsäure-amid-Gruppe, wie einer Crotonsäure-, Itaconsäure-, Fumarsäure-, Maleinsäure-, Acrylamidoglycolsäure- und Methacrylamidoglycolsäure-Ester- oder -Amid-Gruppe. In einer bevorzugten Ausführungsform ist die mindestens eine polymerisierbare Vinyliden-Gruppe in Komponente (iii) eine (Meth)acrylatgruppe, insbesondere eine Methacrylatgruppe. Bevorzugt sind alle in der Zusammensetzung vorliegenden polymerisierbaren Vinyliden-Gruppen (Meth)acrylatgruppen.

Ein Präpolymer mit mindestens zwei polymerisierbaren Vinyliden-Gruppen umfasst zwei oder mehr polymerisierbare Vinyliden-Gruppen, wie beispielsweise zwei, drei, vier oder mehr, bevorzugt zwei polymerisierbare Vinyliden-Gruppen. In einer bevorzugten Ausführungsform besteht Komponente (i) aus einem oder mehreren Präpolymeren mit jeweils zwei polymerisierbaren Vinyliden-Gruppen, insbesondere aus zwei Präpolymeren mit jeweils zwei polymerisierbaren Vinyliden-Gruppen.

Das Präpolymer mit mindestens zwei polymerisierbaren Vinyliden-Gruppen kann ein gewichtsmittleres Molekulargewicht M_{w} von 2000-50000 g/mol, bevorzugt 4000-20000, stärker bevorzugt 4000-10000 g/mol, aufweisen, wobei das gewichtsmittlere Molekulargewicht M_{w} durch Gelpermeationschromatographie mit Tetrahydrofuran als Eluent und Polystyrol als Standard zur Kalibrierung bei einer Säulentemperatur von 30°C bestimmt ist.

Die Viskosität der Komponente (i) kann 100-120.000 mPa·s, bevorzugt 1.000-100.000 mPa·s, weiter bevorzugt 10.000-70.000 mPa·s und insbesondere 5.000-70.000 mPa·s gemessen bei 60°C gemäß DIN 2555 aufweisen. In einer Ausführungsform umfasst Komponente (i) ein Präpolymer mit mindestens zwei polymerisierbaren Vinyliden-Gruppen, das eine Viskosität von 10.000 -100.000 mPa·s, bevorzugt 30.000 - 70.000 mPa·s und insbesondere 50.000 - 65.000 mPa·s gemessen bei 60°C gemäß DIN 2555 aufweist und/oder ein Präpolymer mit mindestens zwei polymerisierbaren Vinyliden-Gruppen, das eine Viskosität von 10.000 - 100.000 mPa·s, bevorzugt 20.000-80.000 mPa·s und insbesondere 30.000 - 70.000 mPa·s gemessen bei 60°C gemäß DIN 2555 aufweist.

Das Präpolymer mit mindestens zwei polymerisierbaren Vinyliden-Gruppen der Komponente (i) kann ausgewählt sein aus Makromonomeren, Oligomeren, oder Polymeren. Bevorzugt ist das Präpolymer mit mindestens zwei polymerisierbaren Vinyliden-Gruppen ein Polycarbonat, Polyether, Polyester, Polyurethan oder eine Polyurethanharnstoffverbindung, bevorzugt ein Polyurethan, Polyester oder eine Polyurethanharnstoffverbindung, noch stärker bevorzugt ein Polyurethan oder eine Polyurethanharnstoffverbindung, mit mindestens zwei polymerisierbaren Vinyliden-Gruppen. Bevorzugt ist das Präpolymer mit mindestens zwei polymerisierbaren Vinyliden-Gruppen ein Polycarbonat, Polyether, Polyester, Polyurethan oder eine Polyurethanharnstoffverbindung mit jeweils mindestens zwei, stärker bevorzugt zwei, (Meth) acrylat-Gruppen.

Alternativ kann das Präpolymer mit mindestens zwei polymerisierbaren Vinyliden-Gruppen auf Zuckerpolymeren, wie beispielsweise Cellulosederivaten, etwa Hydroxyalkylcellulose, Carboxyalkylcellulose, Gummi arabicum, Chitosan, Alginat, Guar Gum, Xanthan Gum, Gelatine, Stärke, oder Agar, oder Polypeptiden wie Polylysin basieren, die mit einer vinylidenhaltigen Carbonsäure wie Acrylsäure, Methacrylsäure, Crotonsäure, Itaconsäure, Fumarsäure, Maleinsäure, Acrylamidoglycolsäure oder Methacrylamidoglycolsäure oder den entsprechenden Säurehalogeniden oder Estern davon umgesetzt sind.

Alternativ kann das Präpolymer mit mindestens zwei polymerisierbaren Vinyliden-Gruppen auf Pflanzenöl, wie z.B. Rizinusöl, Leinöl, Sojaöl, Tallöl, Kiefernöl, Sprossenöl, Vernoniaöl, Lesquerellaöl, Blasenschalenöl, Cashewschalenöl oder anderen Pflanzenölen, die reich an ungesättigten Fettsäuren sind, basieren. Bevorzugt ist das Pflanzenöl-basierte Präpolymer epoxidiert und mit jeweils mindestens zwei (Meth)acrylaten funktionalisiert.

Besonders bevorzugt ist das Präpolymer mit mindestens zwei polymerisierbaren Vinyliden-Gruppen ein Polyester-(Meth)acrylat oder Polyurethan-(Meth)acrylat oder Polyurethanharnstoff-(Meth)acrylat mit jeweils mindestens zwei (Meth)acrylat-Gruppen.

In einer Ausführungsform ist ein Präpolymer mit mindestens zwei polymerisierbaren Vinyliden-Gruppen erhältlich durch Reaktion einer mindestens zweifach hydroxyfunktionellen Verbindung (X) mit einer vinylidenhaltigen Verbindung, wie z.B. (Meth)Acrylsäure, Acryloylchlorid, Methacryloylchlorid, Glycidyl(meth)acrylat oder 2-Isocyantoethyl(meth)acrylat.

Verbindung (X) ist beispielsweise ausgewählt aus Diolen, Polyolen, und mindestens dihydroxyfunktionellen Polyestern, Polycarbonaten, und Polyethern.

In einer Ausführungsform kann Verbindung (X) ausgewählt sein aus
- Polyolen, wie z.B. Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomaltit, die mit Alkylenoxid-Bausteinen, z.B. abgeleitet von Ethylenoxid, Propylenoxid, iso-Butylenoxid, 1-Butenoxid, 2-Butenoxid, Vinyloxiran, Styroloxid und Epichlorhydrin, alkoxyliert sind
- Polyetherdiolen, die aus Alkylenoxid-Bausteinen aufgebaut sein können und z.B. abgeleitet sind von cyclischen Vorläufern wie Ethylenoxid, Propylenoxid, iso-Butylenoxid, 1-Butenoxid, 2-Butenoxid, Vinyloxiran, Styroloxid, Epichlorhydrin und Mischungen davon. Geeignete Polyetherdiole können ebenfalls aus mehreren der oben genannten Bausteine aufgebaut sein. Bevorzugt sind Polyethylenglycol mit einem Molekulargewicht zwischen 722 - 2000 g/mol, Polypropylenglycol mit einem Molekulargewicht von 714 - 2000 g/mol, Polytetrahydrofuran mit einem Molekulargewicht von 739 - 2000 g/mol, Poly-1,3-propandiol mit einem Molekulargewicht zwischen 714 - 2000 g/mol, und
- Polyesterpolyolen, die bevorzugt durch Reaktion von Diolen/Polyolen mit Dicarbonsäuren/Dianhydriden hergestellt werden. Geeignete Diole/Polyole umfassen unter anderem die hierin genannten Diole, Polyole und Polyetherdiole. Geeignete Dicarbonsäuren sind z.B. aliphatisch, cycloaliphatisch, araliphatisch, aromatisch oder hetercyclisch und sind optional mit Halogenen, insbesondere F, Cl oder Br, substituiert. Geeignete Dicarbonsäuren sind insbesondere Oxalsäure, Maleinsäure, Fumarsäure, Bernsteinsäure, Glutarsäure, Adipinsäure, Sebacinsäure, Dodecandisäure, o-Phthalsäure, Isophthalsäure, Terephthalsäure, Trimellithsäure, Azelainsäure, 1,4-Cyclohexandicarbonsäure, Tetrahydrophthalsäure und Korksäure. Geeignete Dianhydride sind z.B. Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid und Succinsäureanhydrid.
- Polycarbonatpolyole, die bevorzugt durch Kondensation von Diarylcarbonaten mit Diolen oder Polyolen oder durch die Umsetzung von Diolen und Polyolen mit Phosgen erhalten sind. Bevorzugte Diole/Polyole sind Bisphenol A, Bisphenol S, Dihydroxydiphenylsulfid, Tetramethylbisphenol A, 1,1-Bis(4-hydroxyphenyl)-3,3,5-trimethylcyclohexan und 1,1,1-Tris(4-hydroxyphenyl)-ethan. Bevorzugte Diarylcarbonate sind Diphenylcarbonat und Ditolylcarbonat oder von anderen aromatischen Verbindungen, wie Kresolen, Chlorphenolen, Methoxyphenolen, Alkylphenolen und Naphtholen abgeleitete Carbonate.

In einer Ausführungsform ist ein Präpolymer mit mindestens zwei polymerisierbaren Vinyliden-Gruppen erhältlich durch die Reaktion einer polyepoxidierten Verbindung (X1) mit einer vinylidenhaltigen Verbindung, z.B. einer vinylidenhaltigen Carbonsäure wie (Meth)acrylsäure, Crotonsäure, Itaconsäure, Fumarsäure, Maleinsäure, Acrylamidoglycolsäure und Methacrylamidoglycolsäure, und Verbindungen gemäß Verbindung (B) wie unten definiert.

Verbindung (X1) ist beispielsweise ausgewählt aus mindestens zweifach epoxidierten pflanzlichen Ölen.

In einer Ausführungsform ist ein Polyurethan mit mindestens zwei polymerisierbaren Vinyliden-Gruppen und ggf. mit einer oder mehreren Harnstoffgruppen erhältlich durch Reaktion eines NCO-Präpolymers (A) mit einer Verbindung (B) umfassend eine polymerisierbare Vinyliden-Gruppe und eine NCO-reaktive Gruppe.

Das NCO-Präpolymer (A) kann durch Reaktion mindestens eines Polyisocyanats (C), d.h. eines mindestens difunktionellen Isocyanats, mit mindestens einer Verbindung (D), umfassend mindestens zwei NCO-reaktive Gruppen, erhältlich sein. NCO-Präpolymer steht für Polymere, insbesondere Polyurethane, die NCO-Gruppen aufweisen.

Die NCO-reaktive Gruppe in der Verbindung (B) und (D) kann unabhängig voneinander jeweils ausgewählt sein aus einer OH-Gruppe, einer NH₂-Gruppe und einer SH-Gruppe.

Die NCO-reaktive Verbindung (D) kann mindestens ein Diol, Polyol, Polyesterpolyol, Polyetherpolyol Polycarbonatpolyol, und/oder mindestens eine nukleophile StickstoffVerbindung (E), bevorzugt ein primäres oder sekundäres Diamin, sein.

In einer Ausführungsform kann Verbindung (D) ausgewählt sein aus
- Diolen, wie z.B. Ethylenglycol, 1,2-Propandiol, 2,2-Dimethyl-1,2-ethandiol, 1,3-Propandiol, 1,2-Butandiol, 1,3-Butandiol, 1,4-Butandiol, 3-Methylpentan-1,5-diol, 2-Ethylhexan-1,3-diol, 2,4 Diethyloctan-1,3-diol, 1,6-Hexandiol, Neopentylglycol, Hydroxypivalinsäureneopentylglycolester, 2-Ethyl-1,3-propandiol, 2-Methyl-1,3-propandiol, 2,2-Bis(4-hydroxycyclohexyl)propan, 1,1-, 1,2-, 1,3- oder 1,4-Cyclohexandimethanol, 1,2-, 1,3- oder 1,4-Cyclohexandiol,
- Polyolen, wie z.B. Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomaltit, die optional mit den oben genannten Bausteinen alkoxyliert sein können. Geeignete Alkylenoxid-Baustein sind z.B. abgeleitet von Ethylenoxid, Propylenoxid, iso-Butylenoxid, 1-Butenoxid, 2-Butenoxid, Vinyloxiran, Styroloxid oder Epichlorhydrin.
- Polyetherdiolen, die aus Alkylenoxid-Bausteinen aufgebaut sein können und z.B. abgeleitet sind von cyclischen Vorläufern wie Ethylenoxid, Propylenoxid, iso-Butylenoxid, 1-Butenoxid, 2-Butenoxid, Vinyloxiran, Styroloxid und Epichlorhydrin. Geeignete Polyetherdiole können ebenfalls aus mehreren der oben genannten Bausteine aufgebaut sein. Bevorzugt sind Polyethylenglycol mit einem Molekulargewicht zwischen 106 - 2000 g/mol, Polypropylenglycol mit einem Molekulargewicht von 134 - 2000 g/mol, Polytetrahydrofuran mit einem Molekulargewicht von 162 - 2000 g/mol, Poly-1,3-propandiol mit einem Molekulargewicht zwischen 134 - 2000 g/mol, und
- Polyesterpolyolen, die bevorzugt durch Reaktion von Diolen/Polyolen mit Dicarbonsäuren/Dianhydriden hergestellt werden. Geeignete Diole/Polyole umfassen unter anderem die o.g. Diole, Polyole und Polyetherdiole. Geeignete Dicarbonsäuren sind z.B. aliphatisch, cycloaliphatisch, araliphatisch, aromatisch oder hetercyclisch und sind optional mit Halogenen, insbesondere F, Cl oder Br, substituiert. Geeignete Dicarbonsäuren sind insbesondere Oxalsäure, Maleinsäure, Fumarsäure, Bernsteinsäure, Glutarsäure, Adipinsäure, Sebacinsäure, Dodecandisäure, o-Phthalsäure, Isophthalsäure, Terephthalsäure, Trimellithsäure, Azelainsäure, 1,4-Cyclohexandicarbonsäure, Tetrahydrophthalsäure und Korksäure. Geeignete Dianhydride sind z.B. Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid und Succinsäureanhydrid
- Polycarbonatpolyole, die bevorzugt durch Kondensation von Diarylcarbonaten mit Diolen oder Polyolen oder durch die Umsetzung von Diolen und Polyolen mit Phosgen erhalten werden. Bevorzugt verwendete Diole/Polyole sind Bisphenol A, Bisphenol S, Dihydroxydiphenylsulfid, Tetramethylbisphenol A, 1,1-Bis(4-hydroxyphenyl)-3,3,5-trimethylcyclohexan und 1,1,1-Tris(4-hydroxyphenyl)-ethan. Bevorzugt verwendete Diarylcarbonate sind Diphenylcarbonat und Ditolylcarbonat oder von den anderen aromatischen Verbindungen, wie Kresole, Chlorphenole, Methoxyphenole, Alkylphenole und Naphtole abgeleitete Carbonate.

Eine geeignete Verbindung (E) kann ausgewählt sein aus Hexamethylendiamin, Adipinsäuredihydrazid 4,4'-Methylen-dianilin, 4,4'-Methylen-bis(2-chloranilin), Diphenylether-4,4'-diamin und Isophorondiamin.

Verbindung (B) kann ausgewählt sein aus hydroxy-, amino-, und/oder thiolfunktionalisierten Verbindungen umfassend mindestens eine polymerisierbare Vinyliden-Gruppe. Es kommen beispielsweise Ester oder Amide von Carbonsäuren wie Acrylsäure, Methacrylsäure, Crotonsäure, Itaconsäure, Fumarsäure und Maleinsäure, Acrylamidoglycolsäure und Methacrylamidoglycolsäure in Frage. Zur Veresterung eignen sich obengenannte Diole oder Polyole und Aminoalkohole, wie z.B. 2-Aminoethanol, 2-(Methylamino)ethanol, 3-Amino-1-propanol, 1-Amino-2-propanol, 2-(2-Aminoethoxy)ethanol oder 2-Mercaptoethanol.

In einer Ausführungsform ist Verbindung (B) ausgewählt aus Hydroxyethylen(meth)acrylat, Aminoethylen(meth)acrylat, Pentaerythritoltriacrylat, Hydroxypropyl(meth)acrylat, 2-Hydroxypropyl(meth)acrylat, 2-Hydroxypropylmethacrylamid, Acrylsäure-4-hydroxybutylester, Glycerindi(meth)acrylat, Glycerinmono(meth)acrylat, und 3-(Acryloyloxy)-2-hydroxypropyl(meth)acrylat.

Verbindung (C) kann ausgewählt sein aus aliphatischen, cycloaliphatischen oder aromatischen Polyisocyanaten, wie 2,2'-Methylendiphenylisocyanat, 2,4'-Methylendiphenylisocyanat und 4,4'-Methylendiphenylisocyanat (MDI), polymerem MDI, 2,4-Toluylendiisocyanat (TDI), 2,6-Toluylendiisocyanat (TDI), Triphenylmethan-4,4',4"-triisocyanat, 2,4,6-Triisocyanattoluol, Isophorondiisocyanat (IPDI), Isophorondiisocyanat-Trimeren, 4,4'-Methylenbis-(cyclohexylisocyanat) (H12MDI), Methyl-2,4-cyclohexandiisocyanat, 1,3,5-Triisocyanatcyclohexan, 1,3,5-Trimethylisocyanatcyclohexan, Trimethylendiisocyanat, 1,4,8-Triisocyanatoctan, 1,3,6-Triisocyanathexan, Tetramethylendiisocyanat, Tetramethylenediisocyanat-Trimeren, Hexamethylendiisocyanat (HMDI), Hexamethylendiisocyanat-Trimeren, Xylendiisocyanat (XDI), insbesondere 1,3- oder 1,4-Xylendiisocyanat, 2,2,4- oder 2,4,4-Trimethyl-1,6-hexamethylendiisocyanat und Derivaten davon, wie z.B. biurethaltigen- und isocyanurathaltigen-Polyisocyanaten, und Mischungen davon. Insbesondere ist Verbindung (C) ausgewählt aus Methylendiphenylisocyanat (MDI), polymeren MDI, Toluylendiisocyanat (TDI), Isophorondiisocyanat und Hexamethylendiisocyanat.

Geeignete Derivate der Isocyanate umfassen z. B. cyclisierte Oligo- oder Polyisocyanate. Die Herstellung cyclisierter Oligo- oder Polyisocyanate ist dem Fachmann bekannt und kann nach den bekannten Methoden der Cyclisierung gemäß W. Siefken (Liebigs Annalen der Chemie 562, 1949, Seiten 75-136) erfolgen, wobei die Oligo-Polyisocyanate offenkettig oder cyclisch vorliegen können. Geeignete Derivate können aus den oben genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen erhalten werden.

Das NCO-Präpolymer (A) kann einen NCO-Restgehalt von 10-50 Mol-%, bevorzugt 20 - 40 Mol-%, bezogen auf die ursprünglich eingesetzte Molmenge an NCO-Gruppen, aufweisen. Die Viskosität des NCO-Präpolymer (A) beträgt z.B. 30.000 - 120.000 mPa·s, bevorzugt 70.000 - 120.000 mPa·s, gemessen bei 23°C gemäß DIN 2555.

Bevorzugt umfasst Komponente (i) mindestens ein Polyurethan mit mindestens zwei polymerisierbaren Vinyliden-Gruppen, insbesondere mindestens ein (cyclo)aliphatisches Polyurethan mit mindestens zwei polymerisierbaren Vinyliden-Gruppen. In einer bevorzugten Ausführungsform umfasst Komponente (i) zwei unterschiedliche aliphatische Polyurethane mit jeweils mindestens zwei polymerisierbaren Vinyliden-Gruppen, wobei das Massenverhältnis des ersten aliphatischen Polyurethans zum zweiten aliphatischen Polyurethan im Bereich von z.B. 1:10-10:1, bevorzugt 1:5-5:1, insbesondere 1:2-2:1 liegt.

Geeignete Polyurethane können ein gewichtsmittleres Molekulargewicht M_{w} von 2000 - 50000 g/mol, bevorzugt 4000 - 20000 g/mol, stärker bevorzugt 4000-10000 g/mol aufweisen, wobei das gewichtsmittlere Molekulargewicht M_{w} durch Gelpermeationschromatographie mit Tetrahydrofuran als Eluent und Polystyrol als Standard zur Kalibrierung bei einer Säulentemperatur von 30°C bestimmt ist.

Die Polyurethane können ggf. auch eine oder mehrere Allophanat-, Carbodiimid-, Isocyanurat-, Biuret, Uretdion-, Harnstoff-, Iminooxadiazindion-, und/oder Uretonimin-Gruppen aufweisen.

Komponente (i) kann auch ein Polyallophanat, Polycarbodiimid, Polyisocyanurat, Polybiuret, Polyuretdion, Polyharnstoff, Polyiminooxadiazindion, und/oder Polyuretonimin mit mindestens zwei polymerisierbaren Vinyliden-Gruppen umfassen.

In einer Ausführungsform ist mindestens ein Präpolymer mit mindestens zwei polymerisierbaren Vinyliden-Gruppen erhältlich durch Reaktion einer Verbindung mit mindestens einer polymerisierbaren Vinyliden-Gruppe und mindestens einer Isocyanatgruppe, wie z.B. 2-Isocyanatoethyl(meth)acrylat, mit einem Polyol oder einem Polyamin, wie z.B. teilweise deacetyliertes Polyvinylamin.

In einer bevorzugten Ausführungsform beträgt der Gehalt an Komponente (i) in der Zusammensetzung 30-80 Gew.-%, bevorzugt 40-70 Gew.-% und insbesondere 45-60 Gew.-% bezogen auf die Gesamtmasse der Zusammensetzung.

Die erfindungsgemäße Zusammensetzung umfasst ferner mindestens einen Photoinitiator (Komponente ii). Insbesondere umfasst die Zusammensetzung mindestens einen Radikalphotoinitiator.

Beispiele für geeignete Photoinitiatoren sind Benzophenone, Acetophenone, Thioxanthone, α-Dicarbonylverbindungen, Phenylglyoxalsäuren, α-Hydroxyketone, insbesondere Hydroxyacetophenone, Phosphinoxide, wie Acylphosphinoxide und Bis-acylphosphinoxide sowie Acylphosphinsulfide und Germaniumverbindungen.

Geeignete Photoinitiatoren sind insbesondere Mono- und Bisacylophosphinoxide, wie 2,4,6-Trimethylbenzoyldiphenylphosphinoxid, Ethyl-2,4,6-trimethylbenzoylphenyl-phosphinat, und Bis-(2,4,6-trimethylbenzoyl)-phenylphosphinoxid, Anisoin, Benzophenon, Hydroxyacetophenon, 2,2-Diethoxyacetophenone, 4,4'-Dihydroxybenzophenon Phenylglyoxylsäure, Acetophenon, Acetonaphtachinon, Methylethylketon, Valerophenon, Hexaphenon, α-Phenylbutyrophenon, p-Morpholinopropiophenon, Dibenzosuberon, 4-Morpholinobenzophenon, b-Methylanthrachinon, *tert*-Butylanthrachinon, Anthrachinoncarbonsäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4 Triacetylbenzol, Thioxanthen-9-on, Xanthen-9-on, 2,4-Dimethylthioxanthon, 2,4-Diethylthioxanthon, 2,4-Diiso-propylthioxanthon, 2,4-Dichlorthioxanthon, Benzoin, Benzoinethylether, Benzoin-isobutylether, Benzoinisopropylether, Benzoinmethylether, Benz[de]anthracen-7-on, 1-Naphtaldehyd, 4,4'-Bis(dimethylamino)benzophenon, 4,4'-Bis(diethylamino)benzophenon 4-Phenylbenzophenon, 4-Chlorbenzophenon, 4-Benzoylbiphenyl, Campherchinon 1-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthren-7,12-dion, 2,2-Diethoxyacetophenon, Benzil, Benzilketale, wie Benzildimethylketal, 2-Methyl-1-[4-(methylthio)phenyl]-2-morpholinopropan-1-on, Anthrachinone wie2-Methylanthrachinon, 2-Ethylanthrachinon, 2-*tert*-Butylanthrachinon, 1-Chloranthrachinon, 2,3-Butandion, (Benzene) tricarbonylchromium, 3,3',4,4'-Benzophenontetracarboxydianhydrid, 2-Benzyl-2-(dimethylamino)-4'-morpholinobutyrophenon, 2-Chlorthioxanthen-9-on, Cumene(cyclopentadienyl)eisen (II) hexafluorophosphat, 4,4'Dimethylbenzil, 2,5-Dimethylbenzophenon, 3,4-Dimethylbenzophenon, 4'-Ethoxyacetophenone, 2-Ethylanthraquinone, Ferrocene, 3'-Hydroxyacetophenon, 4'-Hydroxyacetophenon, 3-Hydroxybenzophenon, 4-Hydroxybenzophenon, 2-Methylbenzophenon, 3-Methylbenzophenon, Methylbenzoylformat, 2-Methyl-4'-(methylthio)-2-morpholinopropiophenon, Phenanthrenchinon, 4'-Phenoxyacetophenon.

Bevorzugte Photoinitiatoren sind Benzophenon, 1-Hydroxycyclohexylphenylketon, 2-Hydroxy-2-methylpropiophenon, Phenylbis(2,4,6-trimethylbenzoyl)phosphinoxid, 2-Hydroxy-1-[4-[4-(2-hydroxy-2-methylpropionyl)benzyl)phenyl)-2-methylpropan-1-on und Mischungen davon.

Manche Photoinitiatoren wie z.B. Benzophenone können in Kombination mit Photosensibilisatoren verwendet werden, die als photochemische Katalysatoren wirken. Beispiele für geeignete Photosensibilisatoren sind tertiäre Amine die als Wasserstoffdonoren eingesetzt werden, wie beispielsweise Methyldiethanolamin, *N,N-*Dimethylaminobenzoat, 2-(N-Methyl-N-phenylamino)-1-phenylethanol, Dimethylaminoethylacrylat, *N*,*N*-Dimethyl-2-morpholinoethan-1-amin sowie Alkyldimethylamin, wobei die Alkylkette 1 bis 20 C-Atome enthalten kann.

Komponente (ii) umfasst insbesondere mindestens einen Photoinitiator, der in einem Wellenlängenbereich von 100-800 nm, bevorzugt 200-600 nm absorbiert. Insbesondere umfasst Komponente (ii) mindestens zwei Photoinitiatoren, die in unterschiedlichen Wellenlängenbereichen unterschiedliche Absorptionsmaxima zeigen, wie beispielsweise in einem Wellenlängenbereich von 250-270 nm und 310-330 nm.

In einer Ausführungsform umfasst die erfindungsgemäße Zusammensetzung zwei Photoinitiatoren, wie beispielsweise einen α-Hydroxyketon-Photoinitiator und einen Phosphinoxid-Photoinitiator, insbesondere in einem Massenverhältnis von 1:10-10:1, bevorzugt 1:5-5:1, insbesondere 1:2-2:1.

Der Gehalt an Komponente (ii) in der Zusammensetzung beträgt bevorzugt 0,1-15 Gew.-%, stärker bevorzugt 1-10 Gew.-% und insbesondere 1-5 Gew.-% bezogen auf die Gesamtmasse der Zusammensetzung.

Die erfindungsgemäße Zusammensetzung umfasst ferner mindestens eine Verbindung mit mindestens einer polymerisierbaren Vinyliden-Gruppe (Komponente (iii)), die sich von dem mindestens einen Präpolymer mit mindestens zwei polymerisierbaren Vinyliden-Gruppen der Komponente (i) unterscheidet. In einer bevorzugten Ausführungsform umfasst Komponente (iii) mindestens zwei, bevorzugt 2-5, verschiedene Verbindungen mit mindestens einer polymerisierbaren Vinyliden-Gruppen, die sich von dem mindestens einen Präpolymer mit mindestens zwei polymerisierbaren Vinyliden-Gruppen der Komponente (i) unterscheiden.

Eine Verbindung mit mindestens einer polymerisierbaren Vinyliden-Gruppe umfasst eine oder mehr polymerisierbare Vinyliden-Gruppen, wie beispielsweise eine, zwei, drei, vier oder mehr polymerisierbare Vinyliden-Gruppen. In einer bevorzugten Ausführungsform besteht Komponente (iii) aus einer oder mehreren Verbindungen mit einer polymerisierbaren Vinyliden-Gruppe, insbesondere aus 2-5 Verbindungen mit einer polymerisierbaren Vinyliden-Gruppe. Die mindestens eine polymerisierbare Vinyliden-Gruppe ist insbesondere eine (Meth)acrylat-Gruppe.

Komponente (iii) weist ein gewichtsmittleres Molekulargewicht von 70 - 800 g/mol, bevorzugt 100 - 500 g/mol und stärker bevorzugt 100 - 450 g/mol auf. In einer bevorzugten Ausführungsform weisen alle Verbindungen mit mindestens einer polymerisierbaren Vinyliden-Gruppe der Komponente (iii) ein gewichtsmittleres Molekulargewicht von 70-800 g/mol, bevorzugt 100-500 g/mol, stärker bevorzugt 100-450 g/mol auf.

Die Viskosität der Komponente (iii) kann 1 - 2.000 mPa·s und bevorzugt 1 - 500 mPa·s gemessen bei 23°C gemäß DIN 2555 betragen. Der Siedepunkt der Komponente (iii) kann in einem Bereich von beispielsweise 80 - 400°C liegen. In einer Ausführungsform umfasst Komponente (iii) mindestens eine Verbindung mit mindestens einer polymerisierbaren Vinyliden-Gruppe, die einen Siedepunkt von 100 - 300°C, insbesondere 200-300°C aufweist.

Die mindestens eine Verbindung mit mindestens einer polymerisierbaren Vinyliden-Gruppe (Komponente (iii)) kann eine ungesättigte Carbonsäure sowie deren Ester, wie Acrylsäure, Methacrylsäure, Crotonsäure, Itaconsäure, Fumarsäure, Maleinsäure, Acrylamidoglycolsäure oder Methacrylamidoglycolsäure, mit einem C₁ - C₂₂ Alkohol, wie Methanol, Ethanol, Propanol, iso-Propanol, Butanol, 2-Butanol, Pentanol, Hexanol, Heptanol, Octanol, Nonanol, Decanol, Undecanol, Dodecanol, Tridecanol, Tetradecanol, Pentadecanol, Hexadecanol, Heptadecanol, Octadecanol, Nonandecanol, Eicosanol, Heneicosanol, Docosanol oder einen Ester davon umfassen.

In einer Ausführungsform kann die mindestens eine Verbindung mit mindestens einer polymerisierbaren Vinyliden-Gruppe (Komponente (iii)) einen Ester einer ungesättigten Carbonsäure, wie Acrylsäure, Methacrylsäure, Crotonsäure, Itaconsäure, Fumarsäure, Maleinsäure, Acrylamidoglycolsäure oder Methacrylamidoglycolsäure, mit einem Diol oder Polyol (beispielsweise ausgewählt aus den oben angeführten Diolen und Polyolen) umfassen.

Weitere Beispiele für Verbindungen der Komponente (iii) sind Vinylether oder Allylether aus Diolen oder Polyolen mit 2 bis 20 C-Atomen.

Weiterhin kann Komponente (iii) auch ein Amid oder Thioester einer ungesättigten Carbonsäure wie Acrylsäure, Methacrylsäure, Crotonsäure, Itaconsäure, Fumarsäure, Maleinsäure, Acrylamidoglycolsäure oder Methacrylamidoglycolsäure, mit Aminen, Polyaminen, Thioalkoholen und Aminoalkoholen, z. B. 2-Aminoethanol, 2-(Methylamino)ethanol, 3- Amino-1-propanol, 1-Amino-2-propanol, 2-(2-Aminoethoxy)ethanol, oder 2-Mercaptoethanol, Ethylendiamin oder Diethylentriamin umfassen. In einer Ausführungsform umfasst Komponente (iii) insbesondere (Meth)acrylamid, *N*-Methylmethacrylamid, *N*,*N*-Dimethyl(meth)acrylamid, *N*,*N-*Diethyl(meth)acrylamid, *N*-[3-(Dimethylamino)propyl](meth)acrylamid, *N-iso*propyl(meth)acrylamid, *N-iso*-Propyl(meth)acrylamid, *N-tert*-Butyl(meth)acrylamid, *N-*(Butoxymethyl)(meth)acrylamid, (Hydroxymethyl)(meth)acrylamid, *N*-(2-Hydroxyethyl)(meth)acrylamid, 6-(Meth)acrylamidohexansäure, Diaceton(meth)acrylamid, 4-(Meth)acryloylmorpholine, 3-(Meth)acryloyl-2-oxazolidinone, *N*-Phenyl(meth)acrylamid, *N*,*N*-Methylenbismethacrylamid oder eine Mischung davon.

Weitere Beispiele für Verbindungen der Komponente (iii) sind vinylaromatische Verbindungen, wie z. B. Styrol, Vinylpyridine, Vinylcarbazole oder Vinylessigsäure, Acrylnitril, Vinylpyrrolidone oder Vinylhalide, wie Vinylidenchlorid.

In einer bevorzugten Ausführungsform umfasst Komponente (iii) mindestens eine (cyclo)aliphatische Verbindung. Bevorzugt umfasst eine Verbindung mit mindestens einer polymerisierbaren Vinyliden-Gruppe der Komponente (iii) eine Poly(C₁₋₃-alkoxylen)-Gruppe und eine (Meth)acrylat-Gruppe, wie beispielsweise Polyethylenglycol(meth)acrylat oder Polypropylenglycol(meth)acrylat, insbesondere Polyethylenglycol(meth)acrylat oder Polypropylenglycol(meth)acrylat mit einem Molekulargewicht zwischen 70 und 800 g/mol.

In einer bevorzugten Ausführungsform umfasst Komponente (iii) (Meth)acrylsäure, Methyl(meth)acrylat, Ethyl(meth)acrylat, Propyl(meth)acrylat, *iso*-Propyl(meth)acrylat, *n-*Butyl(meth)acrylat, *iso*-Butyl(meth)acrylat, *tert*-Butyl(meth)acrylat, *iso*-Pentyl(meth)acrylat, Hexyl(meth)acrylat, Ethylhexyl(meth)acrylat, tert-Butylcyclohexyl(meth)acrylat, Cyclohexyl(meth)acrylat, Stearylmethacrylat, Isobornyl(meth)acrylat, Dicyclopentanyl(meth)acrylat, 2-Phenoxyethyl(meth)acrylat, Benzyl(meth)acrylat, Tetrahydrofurfuryl(meth)acrylat, Furfuryl(meth)acrylat, Mevalonlacton(meth)acrylat, Hydroxyethyl(meth)acrylat, 2-Methoxyethyl(meth)acrylat, 4-Hydroxybutyl(meth)acrylat, Hydroxypropyl(meth)acrylat, 2-(2-Ethoxyethoxy)-ethyl(meth)acrylat, β-Carboxyethyl(meth)acrylat, 2-(Dimethylamino)ethyl(meth)acrylat, 2-(Diethylamino)ethyl(meth)acrylat, 3-Chloro-2-hydroxypropyl(meth)acrylat, 2-Phenoxyethyl(meth)acrylat, Tetramethylenglycol-di(meth)acrylat, Pentamethylenglycoldi(meth)acrylat, Hexamethylenglycol-di(meth)acrylat, Nonamethylenglycol-di(meth)acrylat, Decamethylenglycol-di(meth)acrylat, Dipropyleneglycol-di(meth)acrylat, Tripropyleneglycol-di(meth)acrylat, Ethylenglycol-di(meth)acrylat, Diethylenglycol-di(meth)acrylat, Triethylenglycol-di(meth)acrylat, Tetraethyleneglycol-di(meth)acrylat, 1,3-Butyleneglycoldi(meth)acrylat, Dipentaerythritol-penta/hexaacrylat, Trimethylolpropantri(meth)acrylat, Dimethylolpropan-tetra(meth)acrylat, 5 Mol ethoxyliertes Pentaerythritoltetra(meth)acrylat, Hexandiol-di(meth)acrylat, Glycerol-tri(meth)acrylat, Glyceroldi(meth)acrylat, propoxyliertes Glycerol-tri(meth)acrylat, Pentaerythritol-diacrylat, Pentaerythritol-triacrylat, Pentaerythritol-tetraacrylat Trimethylolpropan-ethoxytriacrylat, Neopentylglycol-di(meth)acrylat, Neopentylglycolpropoxylat (1 PO/OH)-di(meth)acrylat, Bisphenol A-di(meth)acrylat, 1,3,5-Tri(meth)acryloylhexahydro-1,3,5-triazin, Tris(2-acryloyloxyethyl)isocyanurat, Polyethylenglycol(meth)acrylat, Polypropylenglycol(meth)acrylat oder eine Mischung davon.

Der Gehalt an Komponente (iii) in der Zusammensetzung kann 20-70 Gew.-%, 30-65 Gew.-%, bevorzugt 30-55 Gew.-% und insbesondere 40-50 Gew.-% bezogen auf die Gesamtmasse der Zusammensetzung betragen.

Das Massenverhältnis von Komponente (i) zu Komponente (iii) in der Zusammensetzung beträgt beispielsweise 10 : 1 bis 1 : 10, insbesondere 5 : 1 bis 1 : 5.

In einer Ausführungsform umfasst die erfindungsgemäße Zusammensetzung
(i) mindestens ein Präpolymer mit mindestens zwei polymerisierbaren Vinyliden-Gruppen,
(ii) mindestens einen Photoinitiator, und
(iii) mindestens eine Verbindung mit einer polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

In einer bevorzugten Ausführungsform umfasst die erfindungsgemäße Zusammensetzung
(i) mindestens zwei Präpolymere mit mindestens zwei polymerisierbaren Vinyliden-Gruppen,
(ii) mindestens zwei Photoinitiatoren, und
(iii) mindestens eine Verbindung mit einer polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

In einer bevorzugten Ausführungsform umfasst die erfindungsgemäße Zusammensetzung
(i) mindestens zwei Präpolymere mit mindestens zwei polymerisierbaren Vinyliden-Gruppen,
(ii) mindestens zwei Photoinitiatoren, und
(iii) mindestens zwei Verbindungen mit einer polymerisierbaren Vinyliden-Gruppe wobei Komponente (iii) ein gewichtsmittleres Molekulargewicht M_{w} von 70-800 g/mol, bevorzugt 100-500 g/mol, stärker bevorzugt 100-450 g/mol aufweist.

In einer bevorzugten Ausführungsform umfasst die erfindungsgemäße Zusammensetzung
(i) mindestens ein Polyurethan, insbesondere ein aliphatisches Polyurethan, mit mindestens zwei polymerisierbaren Vinyliden-Gruppen und ggf. einer oder mehreren Harnstoffgruppen,
(ii) mindestens einen Photoinitiator, und
(iii) mindestens eine Verbindung mit einer polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

In einer bevorzugten Ausführungsform umfasst die erfindungsgemäße Zusammensetzung
(i) mindestens ein Polyurethan, insbesondere ein aliphatisches Polyurethan, mit mindestens zwei polymerisierbaren Vinyliden-Gruppen und ggf. einer oder mehreren Harnstoffgruppen,
(ii) mindestens einen Photoinitiator, und
(iii) mindestens eine Verbindung mit einer polymerisierbaren Vinyliden-Gruppe, die ein gewichtsmittleres Molekulargewicht von 70-800 g/mol aufweist.

Die erfindungsgemäße Zusammensetzung kann ferner mindestens ein Additiv umfassen. Geeignete Additive können beispielsweise Pigmente, Polymerisationsinhibitoren, Sauerstofffänger, Hydrophobierungsmittel, Tackifier, Farbstoffe, Duftstoffe, Flammschutzmittel, Latentwärmespeicher, Biozide, Konservierungsmittel oder Kombinationen davon sein.

Sauerstofffänger sind Verbindungen, die eine Polymerisationsinhibition in Anwesenheit von Sauerstoff reduzieren oder verhindern. Beispiele für geeignete Sauerstofffänger sind tertiäre Amine wie Methyldiethanolamin, *N,N*-Dimethylaminobenzoat, 2-(*N*-methyl-*N-*phenylamino)-1-phenylethanol, Dimethylaminoethylacrylat sowie Alkyldimethylamin, wobei die Alkylkette 1 bis 20 C-Atome enthalten kann, wie Polycat^{®} 77 und XDM der Firma Air Products.

Polymerisationsinhibitoren sind Verbindungen, die vor allem eine spontane Polymerisation verhindern und somit die Lagerstabilität von radikalisch polymerisierbaren Stoffen und Stoffgemischen erhöhen. Geeignete Polymerisationsinhibitoren sind z. B. Phenol, Hydrochinon, p-Benzochinon, 4-Nitrophenol, 4-Methoxyphenol (MEHQ) und 2,6-Di-*tert-*butyl-4-methylphenol und Phenothiazin.

Geeignete Hydrophobierungsmittel sind z.B. vinylidenhaltige Verbindungen mit Perfluoralkylgruppen mit unterschiedlichen Kettenlängen, wie 2,2,2-Trifluorethyl(meth)acrylat, 1*H*,2*H*-Pentadecafluoro-*n*-octyl(meth)acrylat, 2,2,3,3-Tetrafluoropropyl(meth)acrylat, 1*H*,1*H*,5*H*-Octafluoropentyl(meth)acrylat, Perfluor-C₆-alkylethyl(meth)acrylat, Perfluor-C₈-alkylethyl(meth)acrylat und 2,2,3,3,4,4,5,5-octafluorohexamethylen-Di(meth)acrylat. Ebenso können fluorfreie Alkyl(meth)acrylate, wobei der Alkylrest ein linearer oder verzweigter C₈-C₂₂ Rest ist, oder Silikone zur Hydrophobierung oder Mischungen daraus eingesetzt werden.

Ferner können elektrisch leitfähige, magnetische Metallpartikel in der erfindungsgemäßen Zusammensetzung enthalten sein.

Um die Klebrigkeit und die Elastizität der bondierten Fasereinheit zu erhöhen, können Tackifier wie monofunktionelle ethylenisch ungesättigte Verbindungen auf Basis von Polyalkylenoxid(meth)acrylaten als Additive verwendet werden.

Weitere geeignete Additive, die die Eigenschaften des aus der erfindungsgemäßen Zusammensetzung erhältlichen Polymers in seiner Klebrigkeit beeinflussen, sind beispielsweise primäre, sekundäre und tertiäre Diole wie Ethylenglycol, 1,2-Propandiol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Neopentylglycol, Hydroxypivalinsäureopentylglycolester, 2-Ethyl-1,3-Propandiol, 2-Methyl-1,3-Propandiol, 2,2- Bis(4-hydroxycyclohexyl)propan, 1,1-, 1,2-, 1,3- oder 1,4-Cyclohexandimethanol, 1,2-, 1,3- oder 1,4-Cyclohexandiol, Trimethylolbutan, Trimethylolpropan, Trimethylolethan, Neopentylglycol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomaltit, die optional alkoxyliert sein können, oder Mischungen daraus.

Geeignete Flammschutzmittel sind beispielsweise halogenierte Flammschutzmittel wie z.B. Tetrabrombisphenol A (TBA), Brompolystyrol, chlorierte Paraffine und Dibrompentylglycol (DBNPG). Bevorzugt werden phosphathaltige Flammschutzmittel, besonders bevorzugt organische Phosphorsäureester oder cyclische Phosphatderivate, oder Mischungen davon eingesetzt.

Geeignete Latentwärmespeichermaterialien können aus gesättigtem oder ungesättigtem, linearem, verzweigtem oder zyklischem Kohlenwasserstoff, bevorzugt gesättigtem oder ungesättigtem, linearem, verzweigtem oder zyklischem C₁₀-C₄₀-Alkan und aromatischem C₆-C₂₀ Kohlenwasserstoff ausgewählt sein, und sind insbesondere ausgewählt aus *n-*Hexadecan, *n*-Heptadecan, *n*-Octadecan, *n*-Nonadecan, *n*-Eicosan, Cyclohexan, *n-*Heptadecan, *n*-Octadecan, *n*-Nonadecan, *n*-Eicosan,, Cyclooctan, Cyclodecan, Benzol, Nahphthalin, Biphenyl, gesättigten oder ungesättigten C₆-C₃₀-Fettsäuren, gesättigtem oder ungesättigtem C₆-C₃₀-Fettalkohol und gesättigtem oder ungesättigtem C₆-C₃₀-Fettsäure-C₁-C₁₀-Alkylester, bevorzugt Laurin-, Stearin-, Öl- oder Behensäure, Lauryl-, Stearyl- oder Oleylalkohol, Propylpalmitat, Methylstearat oder Methylpalmitat, und Mischungen.

Biozide, wie Pestizide, Fungizide, Herbizide, Insektizide, Algizide, Molluskizide, Akarizide, Rodentizide, Bakterizide, Antibiotika, Antiseptika, antibakterielle, antivirale, antifungale, antiparasitäre Biozide oder Mischungen davon können ferner als Additiv eingesetzt werden.

Die erfindungsgemäße Zusammensetzung kann optional Konservierungsmittel wie Isothiazolinone enthalten um die Lagerstabilität der Zusammensetzung zu verbessern.

Ferner können Polyalkoxylate wie Polyethylenglycol mit einem Molekulargewicht zwischen 106 - 2000 g/mol, Polypropylenglycol mit einem Molekulargewicht von 134 - 2000 g/mol, Polytetrahydrofuran mit einem Molekulargewicht von 162 - 2000 g/mol, oder Poly-1,3-propandiol mit einem Molekulargewicht zwischen 134 - 2000 g/mol sowie Mischungen daraus als Additive eingesetzt werden. Eine Besonderheit dieser Additive ist ihre relativ geringe Volatilität mit einem Siedepunkt von mind. 180°C.

In einer bevorzugten Ausführungsform liegt die erfindungsgemäße Zusammensetzung bei Raumtemperatur (d.h. 20°C) in flüssiger Form vor, beispielsweise als Lösung oder Dispersion. Die Viskosität der erfindungsgemäßen Zusammensetzung beträgt beispielsweise 1.000-10.000 mPa·s, bevorzugt 2.000-7.500 mPa·s und insbesondere 2.500-4.500 mPa·s gemessen bei 23°C gemäß DIN 2555.

Bevorzugt ist die erfindungsgemäße Zusammensetzung frei von Wasser, d.h. weist weniger als 10 Gew.-%, insbesondere weniger als 5 Gew.-% wie 0.001-5 Gew.-%, vorzugsweise weniger als 2 Gew.-% Wasser in Bezug auf das Gesamtgewicht der Zusammensetzung auf.

In einer Ausführungsform ist die erfindungsgemäße Zusammensetzung frei von organischen Lösungsmitteln, insbesondere organischen Lösungsmitteln wie Butylacetat, Methoxypropylacetat, Methylethylketon, primären Alkoholen, z. B. Methanol, Ethanol, Propanol, *iso*-Propanol, Butanol, Pentanol, Hexanol, Carbonsäureestern, z. B. Ethylacetat, *iso*-Propylacetat, Butylacetat, Methoxypropylacetat, Ketonen, wie z. B. Aceton, Methylethylketon, Dibutylketon, Cyclohexanon, Ethern, wie z. B. Diethylether, Ethylenglykolmonoethylether und *tert*-Butylmethylether, Alkanen, wie z. B. *n*-Pentan, *n-*Hexan, *iso*-Hexan, *n*-Heptan, Octan, *iso*-Octan, Spezialbenzin, Leichtbenzin, Petrolether, Cyclohexan, aromatischen Kohlenwasserstoffen wie z. B. Benzol, Toluol, Xylol, Phenol, Nitrobenzol, Anilin, Methylbenzoat, Phenylacetat, halogenierten aliphatischen Kohlenwasserstoffen wie z. B. Dichlormethan, Chloroform, Tetrachlorkohlenstoff und Dimethylformamid, Dimethylsulfoxid, Kohlenstoffdisulfid, Nitroalkanen, Diethylphosphat, Sulfolan oder Mischungen daraus. Frei von organischen Lösungsmitteln bedeutet, dass die erfindungsgemäße Zusammensetzung weniger als 5 Gew.-%, wie 0.001 - 5 Gew.-%, vorzugsweise weniger als 2 Gew.-%, insbesondere weniger als 1 Gew.-% organisches Lösungsmittel in Bezug auf das Gesamtgewicht der Zusammensetzung aufweist.

In einer bevorzugten Ausführungsform ist die erfindungsgemäße Zusammensetzung frei von Wasser und frei von inerten organischen Lösungsmitteln wie Alkoholen, z. B. Methanol, Ethanol, Propanol, *iso*-Propanol, Butanol, Pentanol, Hexanol, Carbonsäureestern, z. B. Ethylacetat, *iso*-Propylacetat, Butylacetat, Methoxypropylacetat, Ketonen, wie z. B. Aceton, Methylethylketon, Dibutylketon, Cyclohexanon, Ethern, wie z. B. Diethylether, Ethylenglykolmonoethylether und *tert*-Butylmethylether, Alkanen, wie z. B. *n*-Pentan, *n-*Hexan, *iso*-Hexan, *n*-Heptan, Octan, *iso*-Octan, Spezialbenzin, Leichtbenzin, Petrolether, Cyclohexan, aromatischen Kohlenwasserstoffen wie z. B. Benzol, Toluol, Xylol, Phenol, Nitrobenzol, Anilin, Methylbenzoat, Phenylacetat, halogenierten aliphatischen Kohlenwasserstoffen wie z. B. Dichlormethan, Chloroform, Tetrachlorkohlenstoff und Dimethylformamid, Dimethylsulfoxid, Kohlenstoffdisulfid, Nitroalkane, Diethylphosphat, Sulfolan oder Mischungen daraus.

Mit Hilfe der erfindungsgemäßen Zusammensetzung können Filamente, Garne, wie z. B. Effektgarne, einfache Garne, texturierte Garne gefachte Garne, Spinnfasergarne, Rotorgarne, Dreizylindergarne, Kammgarne, Halbkammgarne, Streichgarne, Schappegarne, Bourettegarne, Filamentgarne, wie Multifilgarne und Monofilgarne, Zwirne wie z. B. Effektzwirne, einstufige Zwirne, mehrstufige Zwirne und Umspinnungszwirne, Endloszwirne, Seile, Fasern, wie z. B. Stapelfasern und Faserbündel, und Haspelseide aus natürlichem Material, halbsynthetischen Material, synthetischem Material oder einer Mischung davon bondiert werden.

Nach der Bondierung soll die Fasereinheit flexibel bleiben und eine gleichmäßige Oberfläche besitzen. Ein Entzwirnen und Splissen durch mechanische Beanspruchung soll vermieden werden. Die quantitativen Auflagen an Polymer beträgt bevorzugt zwischen 1 und 30%, insbesondere zwischen 1 und 20% des Gewichts des Garns.

In einem weiteren Aspekt betrifft die vorliegende Erfindung ein Polymer, erhältlich durch Polymerisieren, insbesondere Photopolymerisieren, der erfindungsgemäßen Zusammensetzung. Bei der Photopolymerisierung erfolgt die Bestrahlung mit elektromagnetischer Strahlung, bevorzugt UV-Licht in einem Wellenlängenbereich von 100 bis 800 nm, wie im Folgenden beschrieben. Die üblicherweise zur Polymerisation eingesetzte Strahlungsdosis liegt im Bereich von 80 - 3000 mJ/cm².

Das erfindungsgemäße Polymer weist bevorzugt eine Shore A Härte von 50-150 gemessen gemäß DIN 53505 auf. Die Pendelhärte des erfindungsgemäßen Polymers beträgt bevorzugt 5-20 Sekunden gemessen gemäß DIN 53157.

Die Bruchdehnung des erfindungsgemäßen Polymers beträgt insbesondere 10-1000 %, bevorzugt 10 - 500 %, gemessen gemäß DIN 53504.

In einem weiteren Aspekt betrifft die vorliegende Erfindung die Verwendung der erfindungsgemäßen Zusammensetzung zur Bondierung einer Fasereinheit wie eines Garns, wie z. B. Effektgarne, einfache Garne, texturierte Garne, gefachte Garne, Spinnfasergarne, Rotorgarne, Dreizylindergarne, Kammgarne, Halbkammgarne, Streichgarne, Schappegarne, Bourettegarne, Filamentgarne, wie Multifilgarne und Monofilgarne, eines Zwirns, wie z. B. Effektzwirne, einstufige Zwirne, mehrstufige Zwirne und Umspinnungszwirne, Endloszwirne, eines Seils, von Fasern, wie z. B. Stapelfasern und Faserbündel, und Haspelseide aus natürlichem Material, halbsynthetischen Material, synthetischem Material oder einer Mischung davon.

In einem weiteren Aspekt betrifft die vorliegende Erfindung ein Verfahren zur Bondierung von Fasereinheiten, umfassend die Schritte:
(a) Bereitstellen einer erfindungsgemäßen Zusammensetzung wie hierin beschrieben,
(b) Applizieren der in Schritt (a) bereitgestellten Zusammensetzung auf mindestens eine Fasereinheit, und
(c) Bestrahlen der nach Schritt (b) erhaltenen Fasereinheit mit Strahlung einer Wellenlänge im Bereich von z.B. 100-800 nm, bevorzugt 100-450 nm.

Geeigente Fasereinheiten, die in Schritt (b) eingesetzt werden können, sind bereits oben beschrieben.

In einer Ausführungsform wird die Fasereinheit in Schritt (b) durch ein Tauchbad geführt, das die erfindungsgemäße Zusammensetzung enthält. In einer anderen Ausführungsform wird die erfindungsgemäße Zusammensetzung in Schritt (b) über eine zumindest teilweise in ein Galettenbad tauchende Galette auf die Fasereinheit aufgetragen. Ggf. kann das Tauch- bzw. Galettenbad temperiert werden, beispielsweise um die Viskosität der erfindungsgemäßen Zusammensetzung für die jeweilige Applikationsmethode passgenau zu steuern. Insbesondere sind Parameter wie die Aufnahmemenge und die Penetrationstiefe der Zusammensetzung in die Fasereinheit von der Viskosität der erfindungsgemäßen Zusammensetzung abhängig.

Nach Schritt (b) kann die erfindungsgemäße Zusammensetzung ggf. auf und in der Fasereinheit gleichmäßig verteilt werden, z.B. über ein Abquetschen bzw. Abstreifen von erfindungsgemäßer Zusammensetzung zwischen Walzen, Quetschwalzen, Rollen, Vlies oder anderen dem Fachmann bekannten Abquetsch- bzw. Abstreifvorrichtungen. Dadurch kann eine gleichmäßige Verteilung der erfindungsgemäßen Zusammensetzung im Längs- und/oder Querschnitt der Fasereinheit erreicht werden.

In einer Ausführungsform wird die erfindungsgemäße Zusammensetzung mit Hilfe eines Dosiersystems, insbesondere mittels eines Schwämmchenapplikators, auf die Fasereinheit aufgebracht (Figur 1B). Dabei wird die erfindungsgemäße Zusammensetzung kontinuierlich dem Schwämmchen zugeführt und von dort gleichmäßig auf die Fasereinheit aufgebracht. Im Dosiersystem durchläuft die Fasereinheit zuerst einen Applikationsbereich und anschließend einen in Förderrichtung darauffolgenden Vergleichmäßigungsbereich, in dem beispielsweise über ein Abquetschen bzw. Abstreifen von erfindungsgemäßer Zusammensetzung zwischen Walzen, Quetschwalzen, Rollen, Vlies, oder anderen dem Fachmann bekannten Abquetsch- bzw. Abstreifvorrichtungen eine gleichmäßige Verteilung der erfindungsgemäßen Zusammensetzung im Längs- und/oder Querschnitt der Fasereinheit erreicht wird.

Die Aufnahmemenge der erfindungsgemäßen Zusammensetzung in Schritt (b) liegt im Bereich von z.B. 1-40, bevorzugt 3-30, besonders bevorzugt 5-20 Gewichtsprozent bezogen auf das Gewicht der Fasereinheit. Die Geschwindigkeit mit der die erfindungsgemäße Zusammensetzung in Schritt (b) auf die Fasereinheit appliziert wird liegt in einem Bereich von z.B. 2-150 m/s.

In Schritt (c) erfolgt eine Bestrahlung der in Schritt (b) erhaltenen Fasereinheit, durch die eine Polymerisation der erfindungsgemäßen Zusammensetzung initiiert wird.

Als Strahlenquellen sind insbesondere übliche Lampen geeignet, die vorzugsweise Licht im Wellenlängenbereich von 100 bis 800 nm, bevorzugt im Bereich von 200 nm bis 500 nm und weiter bevorzugt im Bereich von 240 nm bis 400 nm emittieren, z.B. Excimerlampen, gepulste Strahler, Laser, LED-Lampen und Quecksilberhochdruckstrahler. In einer bevorzugten Ausführungsform erfolgt die Bestrahlung mit einer Leistung von 100-500 W/cm. Die üblicherweise zur Vernetzung eingesetzte Strahlungsdosis liegt im Bereich von 80 - 3000 mJ/cm².

In einer bevorzugten Ausführungsform erfolgt die Bestrahlung mithilfe eines luftgekühlten UV Hochdruckstrahlers (z.B. Jetcure 420) mit einer Leistung von 200 W/cm² und dichroidem Reflektor.

Die Bestrahlungsdauer eines Fasereinheitsabschnitts in Schritt (c) liegt insbesondere in einem Bereich von 0,1-300 s, bevorzugt 0,1-100 s, insbesondere 1-10 s. Der Abstand von Fasereinheit und Strahlungsquelle beträgt insbesondere 0,2 bis 20 cm.

Schritt (c) kann in Gegenwart von Luft erfolgen. In einer anderen Ausführungsform erfolgt Schritt (c) unter Inertatmosphäre, da in diesem Fall eine höhere Reaktivität und folglich eine schnellere und vollständigere Polymerisation erzielt werden kann. Schritte (b) und/oder (c) können auch unter Inertatmosphäre erfolgen.

Die nach Schritt (c) erhaltene Fasereinheit kann ggf. ferner mit einer speziellen Präparation oder Ausrüstung, einer sogenannten Avivage, versehen werden, welche die Verarbeitungseigenschaften wie Näheigenschaften der Fasereinheit anpassen bzw. verbessern kann. Mit einer solchen Avivage können beispielsweise die Gleiteigenschaften, die Scheuerfestigkeit und/oder die statische Aufladung der Fasereinheit gesteuert werden.

Der Auftrag der Avivage kann z.B. über einen Umspulvorgang erfolgen, wobei die Avivage mit einer Gallette oder einem Dosiersystem mit Applikator aufgebracht wird. Die Avivage kann beispielsweise Silikone, Paraffine, Wachse, Emulgatoren und/oder Antistatika umfassen.

In einer bevorzugten Ausführungsform ist das erfindungsgemäße Verfahren ein kontinuierliches Verfahren.

In einem weiteren Aspekt betrifft die vorliegende Erfindung eine Fasereinheit, erhältlich durch ein erfindungsgemäßes Verfahren wie hierin beschrieben. Die polymerisierte Bondierungszusammensetzung besitzt eine hohe Flexibilität und Elastizität und weist eine hohe Reißfestigkeit auf, sodass die erfindungsgemäß bondierte Fasereinheit ihre ursprünglichen mechanischen Eigenschaften beibehält. Ebenso ist die polymerisierte Bondierungszusammensetzung nicht klebrig, sodass ein unerwünschtes Aneinanderkleben der Fasereinheit im aufgewickelten Zustand verhindert wird.

Insbesondere bildet die Fasereinheit durch die erfindungsgemäße Bondierung eine kompakte Einheit aus ihren Einzelfasern, die bei hoher mechanischer Belastung wie sie beispielsweise in einem Nähprozess herrscht intakt bleibt. Diese Eigenschaft zeigt sich z.B. im Cutting Test, bei dem die Fasereinheit mit einer handelsüblichen Schere geschnitten wird. Bei einem unbondierten Garn ist nach dem Schneiden ein Aufspreizen der einzelnen Fasern zu beobachten (siehe Figur 2, rechts), wohingegen das erfindungsgemäß bondierte Garn (siehe Figur 2, links) eine kompakte Einheit bleibt, welche kein Aufspreizen der Einzelfasern zeigt. Ein Aufspreizen, wie es bei einer unbondierten Faser beobachtet wird, erschwert beispielsweise das Wiedereinfädeln während des Nähprozesses.

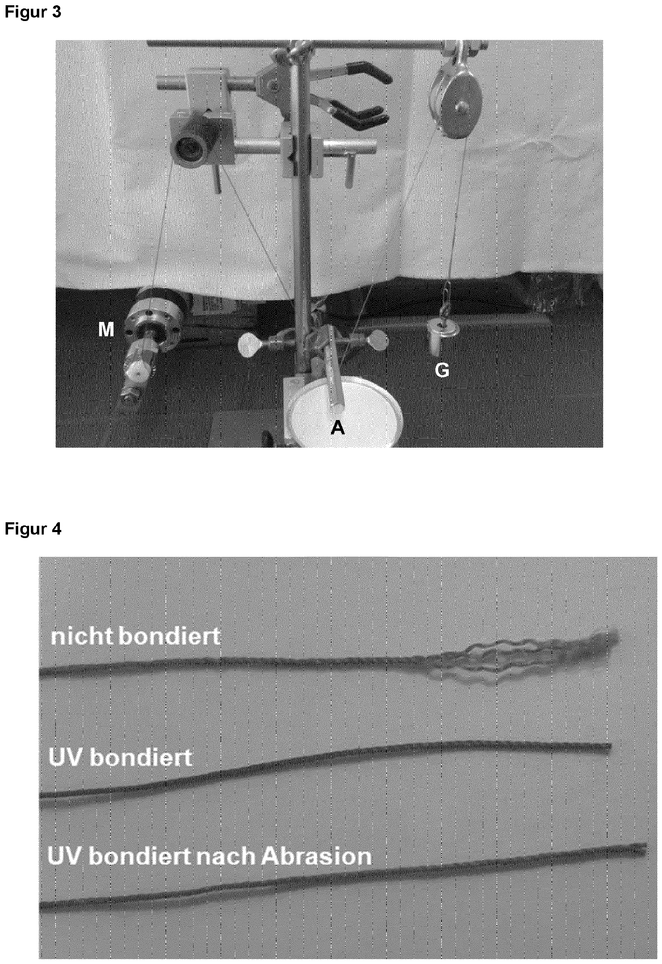

Auch nach Abrasion des Garns (z.B. in einer Abrasionsvorrichtung wie in Figur 3 gezeigt) bleibt die geschnittene Fasereinheit bondiert und bildet eine kompakte Einheit ohne Aufspreizen der Einzelfasern (vgl. Figur 4). Ein erneutes Einfädeln beispielsweise nach einem Faserriss bei Näharbeiten ist damit durch die erfindungsgemäße Zusammensetzung gewährleistet.

Ferner weist die erfindungsgemäße Fasereinheit ein stark vermindertes Absorptionsvermögen gegenüber Wasser auf. In Absorptionstests trat ein Einsinken von Wassertropfen bei einem erfindungsgemäßen Garn beispielsweise innerhalb von 175 s auf, wohingegen das entsprechende unbondierte Garn eine Einsinkzeit von 4 s aufwies. Auch im Wickingtest nach DIN 53924 zeigte sich, dass eine erfindungsgemäß bondierte Fasereinheit mit einer Auflage von 12 % Bondierzusammensetzung eine Steighöhe von 10cm beispielsweise erst nach 13 min erreichte, wohingegen die entsprechende unbondierte Fasereinheit die gleiche Steighöhe innerhalb von 15 s aufwies. Ein vermindertes Wasser-Absorptionsvermögen ist insbesondere vorteilhaft, da eine sonst erforderliche zusätzliche hydrophobe Ausrüstung der Faser entfällt.

Ferner ist die erfindungsgemäße Fasereinheit durch ausreichende antistatische Eigenschaften gekennzeichnet. Insbesondere weist die erfindungsgemäße Fasereinheit vergleichbare antistatische Eigenschaften auf wie die korrespondierende nicht bondierte Fasereinheit. In einer Ausführungsform weist eine erfindungsgemäß bondierte Fasereinheit eine Conductivity Voltage von 3572 V auf, wohingegen das korrespondierende unbondierte Garn einen Wert von 3603 V aufweist, gemessen mittels eines Honigmann Oberflächen-Voltmeters SVM 217E.

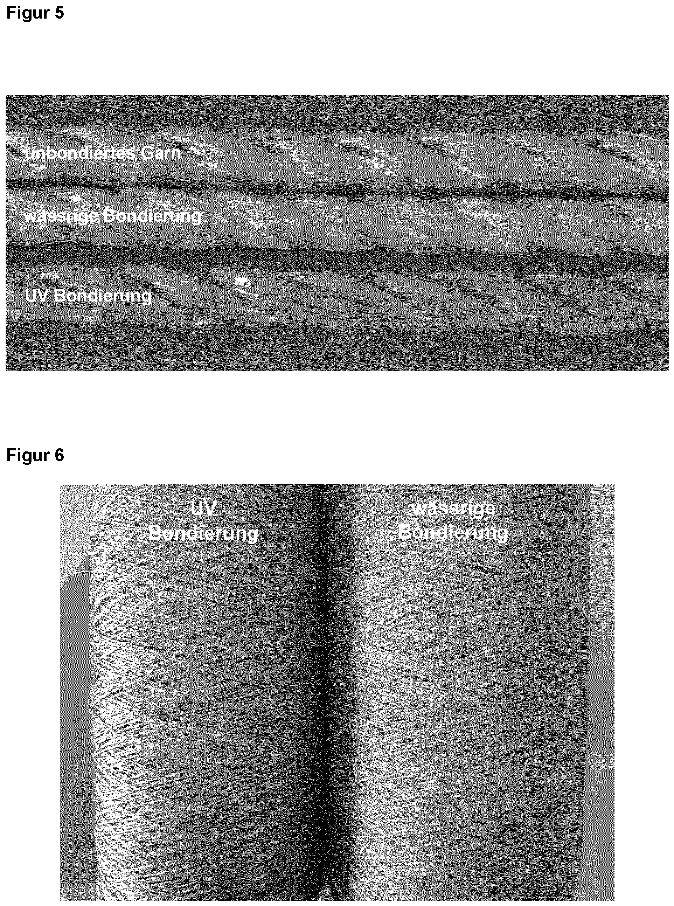

Ferner ist die erfindungsgemäß bondierte Fasereinheit frei von Cratering nach der Applikation und Bestrahlung der Bondierzusammensetzung auf. Garne, die entsprechend dem Stand der Technik bondiert sind, beispielsweise mit einer wässrigen PU-Dispersion, zeigen deutliche Polymer-Partikel auf der Oberfläche des Garns (vgl. Garn in Figur 6 rechts). Solche Polymerpartikel entstehen insbesondere beim Verdampfen des Lösungsmittels (z.B. Wasser), wodurch der an der Garnoberfläche gebildete Polymerfilm aufplatzt und die für Cratering typischen Partikel entstehen. Im Gegensatz dazu zeigt eine erfindungsgemäße Fasereinheit kein Cratering, wie beispielsweise am erfindungsgemäß bondierten Garn in Figur 6 links zu sehen ist, das keine Polymerpartikel (Cratering) aufweist.

Ferner weist die erfindungsgemäß bondierte Fasereinheit eine gleichmäßige Verteilung der Bondierzusammensetzung längs ihres Querschnitts auf, wohingegen sich Bondierzusammensetzungen gemäß dem Stand der Technik bei gleicher Auflagemenge vermehrt auf der Oberfläche der Fasereinheit befinden. In Figur 5 ist zu erkennen, dass ein Garn welches mithilfe einer wässrigen PU-Dispersion bondiert wurde, einen deutlichen Film auf der Oberfläche des Garns aufweist. Dieser "Film-Effekt" ist darauf zurück zu führen, dass das Wasser bei der Trocknung das Polymer an die Oberfläche des Garns fördert. Somit bleibt weniger Polymer im Inneren des Garns zurück, um einen ausreichenden Bondierungseffekt zu gewährleisten. Im Gegensatz dazu behält eine erfindungsgemäße Fasereinheit die ursprüngliche Garnstruktur bei und es kommt selbst bei einer deutlich gesteigerten Menge an aufgebrachter Bondierzusammensetzung (erfindungsgemäße Fasereinheit: 23%; wässrig bondiertes Garn: 12%) zu keiner Filmbildung.

In einer bevorzugten Ausführungsform betrifft die vorliegende Erfindung die Verwendung der erfindungsgemäß bondierten Fasereinheit für die Verarbeitung von Textilien im Allgemeinen. Im Besonderen kann die bondierte Fasereinheit zur Vernähung von Schuhen, Outdoor-Berkleidung, Jacken und Mäntel, Vorhängen, Markisen, Gardinen, Taschen, Rucksäcke, Airbags, Sitzbezüge, Gurte, Kofferraumabdeckungen, Netze, Kopfstützen, Armlehnen, Mittelkonsolen, generell Interieur und Armaturen im Automobilbereich, Cabrioverdecke, Isolierungen, Teppiche, Fußmatten, Teppichböden, Teppichen, Segelstoffen, Bootsplanen, Abdeckplanen für Fahrzeuge und Gartenmöbel, Abdeckplanen die in der Landwirtschaft verwendet werden, Abdeckplanen die im Außenbereich zum Einsatz kommen, Markisen und Zeltstoffe, Fischernetze verwendet.

### Beispiele

Die vorliegende Erfindung wird anhand der folgenden Beispiele näher erläutert, wobei die Erfindung nicht auf diese Beispiele beschränkt ist.

Die aufgeführten physikalischen Eigenschaften sind den Herstellerangaben entnommen. Die verwendeten Messmethoden sind, soweit verfügbar, angegeben.

Ebecryl 205 ist ein strahlenhärtbares, aromatisches Polyurethanacrylat in TPGDA gelöst mit 30.000 mPa·s bei 25°C.

Ebecryl 4740 ist ein strahlenhärtbares, aliphatisches Polyurethanacrylat mit 8000 mPa·s bei 23°C.

Ebecryl 884 ist ein strahlenhärtbares Polyesteracrylat mit einem theoretischen Molekulargewicht von 1250 und einer Viskosität von 25.000 mPa·s bei 25°C.

Desmophen 1700 (SL) ist ein lineares hydroxylgruppenhaltiges Polyesterpolyol mit einer Hydroxylgehalt von 1,3 ± 0,09 % nach DIN EN ISO 4629-2

Desmodur I, auch bekannt als Isophorondiisocyanat, ist ein bifunktionelles aliphatisches cyclisches Isocyanat mit einem NCO Gehalt von 37,5 Gew.-%.

Baxxodur EC 201 auch bekannt als Isophorondiamin ist ein aliphatisches cyclisches Diamin mit einer Aminzahl von 660 ± 10 mg KOH/g nach CTP-TS 31-97.

### Erfindungsgemäßes Ausführungsbeispiel 1

**Tabelle 1.**

| **Komponente** | **Beispiel** | **Anteil in [Gew.-%]** |
|---|---|---|
| Polyurethan Acrylat (i) | Ebecryl 205 | 30 |
| Polyurethan Acrylat (i) | Ebecryl 4740 | 30 |
| (iii) | *tert*-Butylmethacylat | 34 |
| Photoinitiator (ii) | 1-Hydroxyethylcyclohexylphenylketon | 3,0 |
| Photoinitiator (ii) | Benzophenon | 3,0 |

Die einzelnen Komponenten der Zusammensetzung wurden in den in Tabelle 1 angegebenen Gewichtsteilen unter Rühren bei Raumtemperatur gemischt. 16 g der Mischung wurden in eine rechteckige Teflonform (Breite: 14,5 cm, Länge: 19,5 cm) gegossen um einen gleichmäßigen Film zu erhalten. Die Zusammensetzung wurde mit einer Quecksilberdampflampe (Jetcure) bei 100 % Leistung in einem Abstand von 6 cm von der Emitterquelle 3 s bestrahlt. Der erhaltene Film wurde aus der Form gelöst und nochmals auf der Rückseite entsprechend obiger Parameter bestrahlt. Es wurde ein flexibler Film mit einer mittleren Schichtdicke von 0,67 ± 0,14 mm erhalten. Der Film wies folgende Eigenschaften auf:

| | |
|---|---|
| Shore A Härte | 86,70 ± 4,180 (21°C) gemessen gemäß DIN 53505 |
| Pendelhärte: | 27,30 s (21°C) nach König gemessen gemäß DIN 53157 |
| Bruchdehnung: | 6,960 ± 2,020 % (21°C) gemessen gemäß DIN 53504 |

### Erfindungsgemäßes Ausführungsbeispiel 2:

**Tabelle 2.**

| **Komponente** | **Beispiel** | **Anteil in [Gew.-%]** |
|---|---|---|
| Polyurethan Acrylat (i) | Ebecryl 205 | 24,5 |
| Polyurethan Acrylat (i) | Ebecryl 4740 | 9,00 |
| Polyester Acrylat (i) | Ebecryl 884 | 33,5 |
| (iii) | *tert*-Butylmethacylat | 28,0 |
| Photoinitiator (ii) | 1-Hydroxyethylcyclohexylphenylketon | 2,50 |
| Photoinitiator (ii) | Benzophenon | 2,50 |

Die einzelnen Komponenten der Zusammensetzung wurden in den in Tabelle 2 angegebenen Gewichtsteilen unter Rühren bei Raumtemperatur gemischt. 16 g der Mischung wurden in eine rechteckige Teflonform (Breite: 14,5 cm, Länge: 19,5 cm) gegossen um einen gleichmäßigen Film zu erhalten. Die Zusammensetzung wurde mit einer Quecksilberdampflampe (Jetcure) bei 100 % Leistung in einem Abstand von 6 cm von der Emitterquelle 3 s bestrahlt. Der Film wurde aus der Form gelöst und nochmals auf der Rückseite entsprechend obiger Parameter bestrahlt. Es wurde ein flexibler Film mit einer Dicke von 0,62 ± 0,14 mm erhalten. Der Film wies folgende Eigenschaften auf:

| | |
|---|---|
| Shore A Härte: | 87,30 ± 2,43 (21°C) gemessen gemäß DIN 53505 |
| Pendel Härte: | 20,33 s (21°C) nach König gemessen gemäß DIN 53157 |
| Bruchdehnung: | 15,53 ± 3,87 % (21°C) gemessen gemäß DIN 53504 |

### Erfindungsgemäßes Ausführungsbeispiel 3:

**Tabelle 3.**

| **Chemikalie** | **Anteil in [Gew.-%]** |
|---|---|
| Desmophen 1700 (SL) | 40,88 |
| 1,4-Diazabicyclo[2.2.2]octan | 0,1100 |
| *Iso*-Propylacetat | 50,57 |
| Desmodur I | 5,840 |
| Hydroxyethylmethacrylat | 2,150 |
| Baxxodur EC 201 | 0,4500 |
| Hydroxyethylmethacrylat | 50,57 |

In einem Dreihalskolben mit KPG-Rührwerk und Rückflusskühler wurde Desmophen 1700 in *iso*-Propylacetat gelöst. 1,4-Diazabicyclo[2.2.2]octan wurde zugegeben. Die Lösung wurde auf 60°C geheizt und Desmodur I wurde zugegeben. Die Lösung wurde auf 85°C geheizt und 4 h gerührt. Nach NCO-Kontrolle (0,94 Gew.-%) wurde Baxxodur EC 201 zugegeben und weitere 2 h gerührt. Nach weiterer NCO-Kontrolle (0,69 Gew.-%) wurde Hydroxyethylmethacrylat zugegeben und für 20 h gerührt. Die Reaktionslösung wurde auf Raumtemperatur abgekühlt und Hydroxyethylmethacrylat wurde zugegeben. Die flüchtigen Komponenten wurden *in vacuo* entfernt und es wurde eine gelbliche Flüssigkeit mit einer Trockensubstanz von 49,57% erhalten. Die Komponenten wurden in den in Tabelle 3 angegebenen Anteilen eingesetzt.

Die Trockensubstanz wurde mit dem Gerät HX 204 Moisture Analyser von Mettler Tolledo gemessen. Die Messung wurde mit einer Trocknungstemperatur von 105°C, und einem Abschaltkriterium von 1 mg/50s bei einem Startgewicht von min. 2 g durchgeführt.

Die erhaltene Zusammensetzung wurde mit 1-Hydroxyethylcyclohexylphenylketon (2,5 Gew.-%) und Benzophenon (2,5 Gew.-%) abgemischt. 32 g dieser Mischung wurden in eine rechteckige Teflonform (Breite: 14,5cm, Länge: 19,5 cm) gegossen um einen gleichmäßigen Film zu erhalten. Die Zusammensetzung wurde mit einer Quecksilberdampflampe (Jetcure) bei 100 % Leistung in einem Abstand von 6 cm von der Emitterquelle 8 s bestrahlt. Der Film wurde aus der Form gelöst und nochmals auf der Rückseite entsprechend obiger Parameter bestrahlt. Es wurde ein flexibler Film mit einer Dicke von 1,37 ± 0,36 mm erhalten. Der Film wies folgende Eigenschaften auf:

| | |
|---|---|
| Shore A Härte: | 86,70 ± 4,180 (21°C) gemessen gemäß DIN 53505 |
| Pendelhärte: | 16,70 s (21°C) (nach König) gemessen gemäß DIN 53157 |
| Bruchdehnung: | 125,0 ± 20,00 % (21°C) gemessen gemäß DIN 53504 |

### Erfindungsgemäßes Ausführungsbeispiel 4:

Ein zu bondierendes Garn wurde mithilfe einer motorisierten Spuleinheit (20 m/min) durch einen Applikationsaufbau mit Applikator, Abquetschwalze und Bestrahlungszone wie in Figur 1B dargestellt gefördert. Mithilfe einer Schlauchquetschpumpe wurde die Zusammensetzung nach Ausführungsbeispiel 3 von einem Vorratscontainer in den Applikator gefördert (Pumprate 6 g/min). Im Applikator befindet sich eine mit einem Schwämmchen befüllte Kammer die mit der erfindungsgemäßen Zusammensetzung befüllt wurde. Das Garn passierte die Kammer und das Schwämmchen sorgte für eine gleichmäßige Verteilung der Zusammensetzung auf dem Garn. Nach Durchlauf des Applikators wurde das Garn mithilfe einer Quetschwalze abgequetscht. Nach Durchlauf der Quetschwalze passierte das Garn die Bestrahlungszone, umfassend eine luftgekühlte Quecksilberdampflampe mit einer Leistung von 200 W/cm². Der Abstand zwischen Garn und Lichtquelle betrug 4 cm, wobei die motorisierte Spuleinheit das Garn mit einer Geschwindigkeit von 10 m/min durch die Anlage förderte. Nach der Bestrahlung wurde das Garn auf die Wickelrolle aufgewickelt. Die Auflage des so erhaltenen Garns betrug 18 %.

Figur 2 zeigt die geschnittenen Enden eines unbondierten Garns im Vergleich zu einem bondierten Garn entsprechend dem Ausführungsbeispiel 4. Es ist deutlich zu erkennen, dass das bondierte Garn nach Schnitt als Einheit vorliegt, wobei die Filamente des unbondierten Garns entzwirnen.

### Abrasionstest:

Im laufenden Nähprozess ist ein einfaches und schnelles Einfädeln des Garns nach Riss erforderlich. Aus diesem Grunde sollte das Garn trotz des mechanischen Anspruches bondiert bleiben, also als eine kompakte Einheit vorliegen. Um diese Gegebenheiten zu simulieren und die Bondiereigenschaften des Garns im beanspruchten Zustand zu untersuchen wurde das Garn einem Abrasionstest unterzogen.

Der Testaufbau ist in Figur 3 dargestellt. Das Garn wurde mittels einer Motoreinheit M (50 rpm) über eine abrasive Metallfläche A gezogen, wobei ein Belastungsgewicht (G) von 150 g verwendet wurde. Nachdem der Test für 2 min durchgeführt wurde, wurde das Garn im beanspruchten Bereich geschnitten, um zu prüfen ob die Bondierung nach Beanspruchung die einzelnen Filamente zusammenhält. In Figur 4 sind die Ergebnisse dargestellt. Zu erkennen ist, dass ein unbondiertes Garn eine starke Entzwirnung aufweist (oberes Garn). Das erfindungsgemäße Garn, das einem 2-minütigen Abrasionstest unterzogen wurde (unten), zeigt kein Entzwirnen der geschnittenen Enden auf. Dies belegt, dass die erfindungsgemäße Bondierung auch unter dem mechanischen Anspruche des Nähprozesses erhalten bleibt und ein einfaches Wiedereinfädeln des Garns beispielsweise nach Riss möglich ist.

### Vergleichsbeispiel 1:

40 g Beetafin (TS = 40%) wurden in eine rechteckige Form (Breite: 14,5 cm, Länge: 19,5 cm) gegossen. Das Material wurde für 3 Tage bei Raumtemperatur getrocknet. Danach wurde ein Film aus der Form gelöst und bei Temperaturen von 50°C, 70°C und 90°C jeweils für 3 h in einem Trockenofen weiter getrocknet. Abschließend wurde der Film für 3 min bei einer Temperatur von 160°C getrocknet. Es wurde ein flexibler Film mit einer mittleren Dicke von 0,60 ± 0,06 mm erhalten. Der Film wies folgende Eigenschaften auf:

| | |
|---|---|
| Shore A Härte: | 79,50 ± 1,910 (21°C) gemäß DIN 53505 |
| Pendel härte: | 6,650 s (21°C) (nach König) gemäß DIN 53157 |
| Bruchdehnung: | 1172 ± 40,79 % (21°C) gemäß DIN 53504 |

Die folgenden Punkte sind Gegenstand der vorliegenden Erfindung:
1. Zusammensetzung umfassend:
   (i) mindestens ein Präpolymer mit mindestens zwei polymerisierbaren Vinyliden-Gruppen,
   (ii) mindestens einen Photoinitiator, und
   (iii) mindestens eine Verbindung mit mindestens einer polymerisierbaren Vinyliden-Gruppe,
      wobei Komponente (iii) ein gewichtsmittleres Molekulargewicht M_{w} von 70-800 g/mol, bevorzugt 100-500 g/mol, stärker bevorzugt 100-450 g/mol aufweist.
2. Zusammensetzung nach Punkt 1, wobei die Zusammensetzung mindestens 2, bevorzugt 2-5, insbesondere 2 Präpolymere mit mindestens zwei polymerisierbaren Vinyliden-Gruppen umfasst.
3. Zusammensetzung nach einem der vorhergehenden Punkte, wobei die polymerisierbare Vinyliden-Gruppe in den Komponenten (i) und (iii) jeweils unabhängig voneinander ausgewählt ist aus einer (Meth)acrylatgruppe, Vinylgruppe und Allylgruppe, insbesondere aus einer (Meth)acrylsäure-ester-Gruppe und (Meth)acrylsäure-amid-Gruppe wie einer Crotonsäure-, Itaconsäure-, Fumarsäure-, Maleinsäure-, Acrylamidoglycolsäure- und Methacrylamidoglycolsäure-ester- oder -amid-Gruppe.
4. Zusammensetzung nach einem der vorhergehenden Punkte, wobei Komponente (i) ein gewichtsmittleres Molekulargewicht M_{w} von 2000 - 50000 g/mol, bevorzugt 4000 - 10000 g/mol aufweist.
5. Zusammensetzung nach einem der vorhergehenden Punkte, wobei Komponente (i) eine Viskosität von 100-120.000 mPa·s, bevorzugt 1.000-100.000 mPa·s und insbesondere 10.000-70.000 mPa·s gemessen bei 60°C gemäß DIN 2555 aufweist.
6. Zusammensetzung nach einem der vorhergehenden Punkte, wobei mindestens ein Präpolymer mit mindestens zwei polymerisierbaren Vinyliden-Gruppen erhältlich ist durch Reaktion eines NCO-Präpolymers (A) mit einer Verbindung (B) umfassend eine polymerisierbare Vinyliden-Gruppe und eine NCO-reaktive Gruppe.
7. Zusammensetzung nach Punkt 6, wobei Verbindung (B) ausgewählt ist aus Hydroxyethylen(meth)acrylat, Aminoethylen(meth)acrylat, einem Acrylsäure-, Methacrylsäure-, Crotonsäure-, Itaconsäure-, Fumarsäure-, Maleinsäure-, Acrylamidoglycolsäure- oder Methacrylamidoglycolsäureester eines Diols wie einem Ethylenglycol-, 1,2-Propandiol-, 2,2-Dimethyl-1,2-thandiol-, 1,3-Propandiol-, 1,2-Butandiol-, 1,3-Butandiol-, 1,4-Butandiol-, 3-Methylpentan-1,5-diol-, 2-Ethylhexan-1,3-diol-, 2,4 Diethyloctan-1,3-diol-, 1,6-Hexandiol-, Neopentylglycol-, Hydroxypivalinsäureopentylglycolester-, 2-Ethyl-1,3-Propandiol-, 2-Methyl-1,3-Propandiol-, 2,2-Bis(4-hydroxycyclohexyl)propan-, 1,1-, 1,2-, 1,3- oder 1,4-Cyclohexandimethanol-, 1,2-, 1,3- oder 1,4-Cyclohexandiol-Ester, eines Polyols wie einem Trimethylolbutan-, Trimethylolpropan-, Trimethylolethan-, Pentaerythrit-, Glycerin-, Ditrimethylolpropan-, Dipentaerythrit-, Sorbit-, Mannit-, Diglycerol-, Threit-, Erythrit-, Adonit (Ribit)-, Arabit (Lyxit)-, Xylit-, Dulcit (Galactit)-, Maltit- oder Isomaltit-Ester, eines Aminoalkohols wie einem 2-Aminoethanol-, 2-(Methylamino)ethanol-, 3- Amino-1-propanol-, 1-Amino-2-propanol-, 2-(2-Aminoethoxy)ethanol- oder 2-Mercaptoethanol-Ester, einem Acrylsäure-, Methacrylsäure-, Crotonsäure-, Itaconsäure-, Fumarsäure-, Maleinsäure-, Acrylamidoglycolsäure- oder Methacrylamidoglycolsäureamid und Mischungen davon.
8. Zusammensetzung nach einem der Punkte 6-7, wobei das NCO-Präpolymer (A) einen NCO-Restgehalt von 10-50 Mol-%, bevorzugt 20-40 Mol-%, bezogen auf die ursprüngliche eingesetzte Molmenge an NCO aufweist.
9. Zusammensetzung nach einem der Punkte 6-8, wobei das NCO-Präpolymer (A) eine Viskosität von 30.000-120.000 mPa·s, bevorzugt 70.000-100.000 mPa·s gemessen bei 23°C gemäß DIN 2555 aufweist.
10. Zusammensetzung nach einem der Punkte 6-9, wobei das NCO-Präpolymer (A) erhältlich ist durch Reaktion mindestens eines Polyisocyanats (C), insbesondere eines (cyclo)aliphatischen Polyisocyanats, mit mindestens einer Verbindung (D) umfassend mindestens zwei NCO-reaktive Gruppen.
11. Zusammensetzung nach einem der Punkte 6-10, wobei das Polyisocyanat (C) ausgewählt ist aus aliphatischen, cycloaliphatischen oder aromatischen Polyisocyanaten, wie 2,2'-Methylendiphenylisocyanat, 2,4'-Methylendiphenylisocyanat, und 4,4'-Methylendiphenylisocyanat (MDI), polymerem MDI, 2,4-Toluylendiisocyanat (TDI), 2,6-Toluylendiisocyanat (TDI), Triphenylmethan-4,4',4"-triisocyanat, 2,4,6-Triisocyanattoluol, Isophorondiisocyanat (IPDI), Isophorondiisocyanat-Trimeren, 4,4'-Methylenebis-(cyclohexylisocyanat) (H12MDI), Methyl-2,4-cyclohexan-diisocyanat, 1,3,5-Triisocyanatcyclohexan, 1,3,5-Trimethylisocyanat-cyclohexan, Trimethylendiisocyanat, 1,4,8-Triisocyanatoctan, 1,3,6-Triisocyanat-hexan, Tetramethylendiisocyanat, Tetramethylenediisocyanat-Trimeren, Hexamethylendiisocyanat (HMDI), Hexamethylendiisocyanat-Trimeren, Xylendiisocyanat (XDI), 2,2,4- oder 2,4,4-Trimethyl-1,6-hexamethylendiisocyanat, Derivaten davon und Mischungen davon, insbesondere aus Methylendiphenylisocyanat (MDI), polymerem MDI, Toluylendiisocyanat (TDI), Isophorondiisocyanat und Hexamethylendiisocyanat.
12. Zusammensetzung nach einem der Punkte 6-11, wobei die NCO-reaktive Gruppe der Verbindung (B) und (D) unabhängig voneinander jeweils ausgewählt ist aus einer HydroxyGruppe, einer Amino-Gruppe und einer Thiol-Gruppe.
13. Zusammensetzung nach einem der Punkte 6-12, wobei Verbindung (D) ausgewählt ist aus einem Polyol, insbesondere einem Polyesterpolyol, Polycarbonatpolyol oder einem Polyetherpolyol, einem primären oder sekundären Diamin, wie Hexamethylendiamin, Adipinsäuredihydrazid, 4,4'-Methylen-dianilin, 4,4'-Methylen-bis(2-chloranilin), Diphenylether-4,4'-diamin, oder Isophorondiamin, und Mischungen davon.
14. Zusammensetzung nach einem der vorhergehenden Punkte, wobei mindestens ein Präpolymer mit mindestens zwei polymerisierbaren Vinyliden-Gruppen erhältlich ist durch Reaktion einer Polyolverbindung, wie einem Polyesterpolyol, Polycarbonatpolyol oder Polyetherpolyol, oder einer polyepoxidierten Verbindungen (X1) mit einem (Meth)acrylat wie Acrylsäure, Methacrylsäure, Crotonsäure, Itaconsäure, Fumarsäure Maleinsäure-, Acrylamidoglycolsäure- und Methacrylamidoglycolsäure
15. Zusammensetzung nach einem der vorhergehenden Punkte, wobei Komponente (i) ein Polyurethan, ein Polycarbonat, ein Polyether, ein Polyester, ein funktionalisiertes Pflanzenöl oder ein funktionalisiertes Zuckerpolymer, insbesondere ein (cyclo)aliphatisches Polyurethan ggf. mit einer oder mehreren Harnstoffgruppen, mit mindestens zwei polymerisierbaren Vinyliden-Gruppen, insbesondere mindestens zwei (Meth)acrylat-Gruppen, oder eine Mischung davon ist.
16. Zusammensetzung nach einem der vorhergehenden Punkte, wobei der Gehalt an Komponente (i) in der Zusammensetzung 30-80 Gew.-%, bevorzugt 40-70 Gew.-% und insbesondere 45-60 Gew.-% bezogen auf die Gesamtmasse der Zusammensetzung beträgt.
17. Zusammensetzung nach einem der vorhergehenden Punkte, wobei der Photoinitiator ein Radikalphotoinitiator, insbesondere ausgewählt aus Benzophenonen, Acetophenonen, insbesondere Hydroxyacetophenonen, Thioxanthonen, α-Dicarbonylverbindungen, Phenylglyoxalsäuren, α-Hydroxyketonen, Phosphinoxiden, wie Acylphosphinoxid und Bisacylphosphinoxid, Acylphosphinsulfiden und Germaniumverbindungen oder einer Mischung davon, ist.
18. Zusammensetzung nach einem der vorhergehenden Punkte, wobei der Photoinitiator ausgewählt ist aus Mono- und Bisacylophosphinoxide, wie 2,4,6-Trimethylbenzoyldiphenylphosphinoxid, Ethyl-2,4,6-trimethylbenzoylphenylphosphinat, und Bis-(2,4,6-trimethylbenzoyl)-phenylphosphinoxid, Anisoin, Benzophenon, Hydroxyacetophenon, 2,2-Diethoxyacetophenone, 4,4'-Dihydroxybenzophenon Phenylglyoxylsäure, Acetophenon, Acetonaphtachinon, Methylethylketon, Valerophenon, Hexaphenon, α-Phenylbutyrophenon, p-Morpholinopropiophenon, Dibenzosuberon, 4-Morpholinobenzophenon, b-Methylanthrachinon, tert-Butylanthrachinon, Anthrachinoncarbonsäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4 Triacetylbenzol, Thioxanthen-9-on, Xanthen-9-on, 2,4-Dimethylthioxanthon, 2,4-Diethylthioxanthon, 2,4-Diiso-propylthioxanthon, 2,4-Dichlorthioxanthon, Benzoin, Benzoinethylether, Benzoin-isobutylether, Benzoinisopropylether, Benzoinmethylether, Benz[de]anthracen-7-on, 1-Naphtaldehyd, 4,4'-Bis(dimethylamino)benzophenon, 4,4'-Bis(diethylamino)benzophenon 4-Phenylbenzophenon, 4-Chlorbenzophenon, 4-Benzoylbiphenyl, Campherchinon 1-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthren-7,12-dion, 2,2-Diethoxyacetophenon, Benzil, Benzilketale, wie Benzildimethylketal, 2-Methyl-1-[4-(methylthio)phenyl]-2-morpholinopropan-1-on, Anthrachinone wie2-Methylanthrachinon, 2-Ethylanthrachinon, 2-*tert*-Butylanthrachinon, 1-Chloranthrachinon, 2,3-Butandion, (Benzene) tricarbonylchromium, 3,3',4,4'-Benzophenontetracarboxydianhydrid, 2-Benzyl-2-(dimethylamino)-4'-morpholinobutyrophenon, 2-Chlorthioxanthen-9-on, Cumene(cyclopentadienyl)eisen (II) hexafluorophosphat, 4,4'Dimethylbenzil, 2,5-Dimethylbenzophenon, 3,4-Dimethylbenzophenon, 4'-Ethoxyacetophenone, 2-Ethylanthraquinone, Ferrocene, 3'-Hydroxyacetophenon, 4'-Hydroxyacetophenon, 3-Hydroxybenzophenon, 4-Hydroxybenzophenon, 2-Methylbenzophenon, 3-Methylbenzophenon, Methylbenzoylformat, 2-Methyl-4'-(methylthio)-2-morpholinopropiophenon, Phenanthrenchinon, 4'-Phenoxyacetophenon, Germanium-Photoinitiatoren und Mischungen davon, bevorzugt Benzophenon, 1-Hydroxycyclohexylphenylketon, 2-Hydroxy-2-methylpropiophenon, Phenylbis(2,4,6-trimethylbenzoyl)phosphinoxid, 2-Hydroxy-1-[4-[4-(2-hydroxy-2-methylpropionyl)benzyl)phenyl)-2-methylpropan-1-on und Mischungen davon.
19. Zusammensetzung nach einem der vorhergehenden Punkte, wobei der Gehalt an Komponente (ii) in der Zusammensetzung 0,1-15 Gew.-%, bevorzugt 1-10 Gew.-% und insbesondere 1-5 Gew.-% bezogen auf die Gesamtmasse der Zusammensetzung beträgt.
20. Zusammensetzung nach einem der vorhergehenden Punkte, wobei Komponente (iii) eine Viskosität von 1-2.000 mPa·s und bevorzugt 1-500 mPa·s gemessen bei 23°C gemäß DIN 2555 aufweist.
21. Zusammensetzung nach einem der vorhergehenden Punkte, wobei Komponente (iii) mindestens 2, bevorzugt 2-5 Verbindungen mit mindestens einer polymerisierbaren Vinyliden-Gruppe umfasst.
22. Zusammensetzung nach einem der vorhergehenden Punkte, wobei mindestens eine Verbindung mit mindestens einer polymerisierbaren Vinyliden-Gruppe der Komponente (iii) eine Poly(C₁₋₃-alkoxylen)-Gruppe und bevorzugt eine (Meth)acrylat-Gruppe umfasst und insbesondere Polyethylenglycol(meth)acrylat oder Polypropylenglycol(meth)acrylat ist.
23. Zusammensetzung nach einem der vorhergehenden Punkte, wobei mindestens eine Verbindung mit mindestens einer polymerisierbaren Vinyliden-Gruppe der Komponente (iii) ausgewählt ist aus (Meth)acrylsäure, Methyl(meth)acrylat, Ethyl(meth)acrylat, Propyl(meth)acrylat, *iso*-Propyl(meth)acrylat, *n*-Butyl(meth)acrylat, *iso*-Butyl(meth)acrylat, *tert*-Butyl(meth)acrylat, *iso*-Pentyl(meth)acrylat, Hexyl(meth)acrylat, Ethylhexyl(meth)acrylat, *tert*-Butylcyclohexyl(meth)acrylat, Cyclohexyl(meth)acrylat, Stearylmethacrylat, Isobornyl(meth)acrylat, Dicyclopentanyl(meth)acrylat, 2-Phenoxyethyl(meth)acrylat, Benzyl(meth)acrylat, Tetrahydrofurfuryl(meth)acrylat, Furfuryl(meth)acrylat, Mevalonlacton(meth)acrylat, Hydroxyethyl(meth)acrylat, 2-Methoxyethyl(meth)acrylat, 4-Hydroxybutyl(,eth)acrylat, Hydroxypropyl(meth)acrylat, 2-(2-Ethoxyethoxy)-ethyl(meth)acrylat, β-Carboxyethyl(meth)acrylat, 2-(Dimethylamino)ethyl(meth)acrylat, 2-(Diethylamino)ethyl(meth)acrylat, 3-Chloro-2-hydroxypropyl(meth)acrylat, 2-Phenoxyethyl(meth)acrylat, Tetramethylenglycol-Di(meth)acrylat, Pentamethylenglycol-Di(meth)acrylat, Hexamethylenglycol-Di(meth)acrylat, Nonamethylenglycol-Di(meth)acrylat, Decamethylenglycol-Di(meth)acrylat, Dipropyleneglycol-Di(meth)acrylat, Tripropyleneglycol-Di(meth)acrylat, Ethylenglycol-Di(meth)acrylat, Diethylenglycol-Di(meth)acrylat, Triethylenglycol-Di(meth)acrylat, Tetraethyleneglycol-Di(meth)acrylat, 1,3 Butyleneglycoldi(meth)acrylat, Dipentaerythritol-Penta/Hexa-Acrylat, Trimethylolpropan-Tri(meth)acrylat, Dimethylolpropan-Tetra(meth)acrylat, 5 Mol ethoxyliertes Pentaerythritol-Tetra(meth)acrylat, Hexandiol-Di(meth)acrylat, Glycerol-Tri(meth)acrylat, Glycerol-Di(meth)acrylat, propoxyliertes Glycerol-Tri(meth)acrylat, Pentaerythritol-Diacrylat, Pentaerythritol-Triacrylat, Pentaerythritol-Tetraacrylat Trimethylolpropan-Ethoxytriacrylat, Neopentylglycol-Di(meth)acrylat, Neopentylglycolpropoxylat (1 PO/OH) di(meth)acrylat, Bisphenol A-Di(meth)acrylat, 1,3,5-Tri(meth)acryloylhexahydro-1,3,5-triazine, Tris(2-acryloyloxyethyl)Isocyanurat, Polyethylenglycol(meth)acrylat, Polypropylenglycol(meth)acrylat oder einer Mischung davon.
24. Zusammensetzung nach Punkt 22 oder 23, wobei die mindestens eine Verbindung mit mindestens einer polymerisierbaren Vinyliden-Gruppe der Komponente (iii) ein reaktives Verdünnungsmittel ist.
25. Zusammensetzung nach einem der vorhergehenden Punkte, wobei der Gehalt an Komponente (iii) in der Zusammensetzung 20-70 Gew.-%, bevorzugt 30-55 Gew.-% und insbesondere 40-50 Gew.-% bezogen auf die Gesamtmasse der Zusammensetzung beträgt.
26. Zusammensetzung nach einem der vorhergehenden Punkte, umfassend
   (i) mindestens zwei Präpolymere, bevorzugt (cyclo)aliphatische Polyurethane ggf. mit einer oder mehreren Harnstoffgruppen, mit mindestens zwei polymerisierbaren Vinyliden-Gruppen,
   (ii) mindestens zwei Photoinitiatoren, und
   (iii) mindestens zwei Verbindungen, bevorzugt (cyclo)aliphatische Verbindungen, mit mindestens einer, insbesondere einer, polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.
27. Zusammensetzung nach einem der vorhergehenden Punkte, wobei die Zusammensetzung frei von Wasser ist.
28. Zusammensetzung nach einem der vorhergehenden Punkte, wobei die Zusammensetzung frei von organischen Lösungsmitteln, insbesondere inerten organischen Lösungsmitteln wie Alkoholen, z. B. Methanol, Ethanol, Propanol, *iso*-Propanol, Butanol, Pentanol, Hexanol, Carbonsäureestern, z. B. Ethylacetat, *iso*-Propylacetat, Butylacetat, Methoxypropylacetat, Ketonen, wie z. B. Aceton, Methylethylketon, Dibutylketon, Cyclohexanon, Ethern, wie z. B. Diethylether, Ethylenglykolmonoethylether und *tert-*Butylmethylether, Alkanen, wie z. B. *n*-Pentan, *n*-Hexan, *iso*-Hexan, *n*-Heptan, Octan, *iso-*Octan, Spezialbenzin, Leichtbenzin, Petrolether, Cyclohexan, aromatischen Kohlenwasserstoffen wie z. B. Benzol, Toluol, Xylol, Phenol, Nitrobenzol, Anilin, Methylbenzoat, Phenylacetat, halogenierten aliphatischen Kohlenwasserstoffen wie z. B. Dichlormethan, Chloroform, Tetrachlorkohlenstoff und Dimethylformamid, Dimethylsulfoxid, Kohlenstoffdisulfid, Nitroalkane, Diethylphosphat, Sulfolan und Mischungen daraus ist.
29. Zusammensetzung nach einem der vorhergehenden Punkte, wobei die Zusammensetzung eine Viskosität von 1.000-10.000 mPa·s, bevorzugt 2.000-7.500 mPa·s und insbesondere 2.500-4.500 mPa·s gemessen bei 23°C nach DIN 2555 aufweist.
30. Polymer, erhältlich durch Bestrahlen der Zusammensetzung nach einem der Punkte 1-29.
31. Verwendung der Zusammensetzung nach einem der Punkte 1-29 zur Bondierung einer Fasereinheit, insbesondere eines Garns, wie z. B. eines Effektgarns, einfachen Garns, texturierten Garns, gefachten Garns, Spinnfasergarns, Rotorgarns, Dreizylindergarns, Kammgarns, Halbkammgarns, Streichgarns, Schappegarns, Bourettegarns, Filamentgarns wie Multifilgarns und Monofilgarns, eines Zwirns, wie z. B. eines Effektzwirns, einstufigen Zwirns, mehrstufigen Zwirns, Umspinnungszwirns, Endloszwirns, eines Seils, von Fasern, wie z. B. Kurzfasern, Langfasern, Stapelfasern und Faserbündel, und Haspelseide aus natürlichem Material, halbsynthetischen Material, synthetischem Material oder einer Mischung davon.
32. Verfahren zur Bondierung von Fasereinheiten, umfassend die Schritte:
   (a) Bereitstellen einer Zusammensetzung nach einem der Punkte 1-29,
   (b) Applizieren der in Schritt (a) bereitgestellten Zusammensetzung auf mindestens eine Fasereinheit,
   (c) Bestrahlen der nach Schritt (b) erhaltenen Fasereinheit mit Strahlung, insbesondere mit einer Wellenlänge im Bereich von 100-450 nm.
33. Verfahren nach Punkt 32, wobei die Fasereinheit in Schritt (b) ausgewählt ist aus einem Garn, wie z. B. Effektgarn, einfachen Garn, texturierten Garn, gefachten Garn, Spinnfasergarn, Rotorgarn, Dreizylindergarn, Kammgarn, Halbkammgarn, Streichgarn, Schappegarn, Bourettegarn, Filamentgarn wie Multifilgarn und Monofilgarn, einem Zwirn wie z. B. Effektzwirn, einstufigen Zwirn, mehrstufigen Zwirn, Umspinnungszwirn, Endloszwirn, einem Seil, Fasern, wie z. B. Kurzfasern, Langfasern, Stapelfasern und Faserbündel, und Haspelseide aus natürlichem Material, halbsynthetischen Material, synthetischem Material und einer Mischung davon.
34. Verfahren nach einem der Punkte 32-33, wobei in Schritt (b) die Zusammensetzung in einer Menge von 1-40, bevorzugt 3-30, besonders bevorzugt 5-20 Gew.-% bezogen auf das Gewicht der Fasereinheit appliziert wird.
35. Verfahren nach einem der Punkte 32-34, wobei Schritt (c) für einen Zeitraum von 0,5-600 s, bevorzugt 0,5-300 s, insbesondere 1-10 s durchgeführt wird.
36. Fasereinheit erhältlich durch ein Verfahren nach einem der Punkte 32-35.
37. Fasereinheit, umfassend ein Polymer nach Punkt 30.
38. Fasereinheit nach Punkt 36 oder 37, die eine gleichmäßige Verteilung der applizierten Zusammensetzung längs ihres Querschnitts aufweist.
39. Fasereinheit nach einem der Punkte 36-38, die kein Cratering aufweist.
40. Verwendung der Fasereinheit nach einem der Punkte 36-39 bei der Verarbeitung von Textilien, insbesondere zur Vernähung von Schuhen, Outdoor-Bekleidung, Jacken, Mäntel, Vorhängen, Markisen, Zeltstoffen, Gardinen, Taschen, oder Rucksäcken, im Automobilbereich, insbesondere bei der Verarbeitung von Airbags, Sitzbezügen, Gurten, Kofferraumabdeckungen, Netzen, Kopfstützen, Armlehnen, Mittelkonsolen, Cabrioverdecken, Isolierungen, Teppichen, Fußmatten, oder bei der Verarbeitung von Teppichböden, Teppichen, Segelstoffen, Bootsplanen, Abdeckplanen und Fischernetzen.
41. Polymer nach Punkt 30, das eine Shore A Härte von 50-100 gemessen gemäß DIN 53505 aufweist.
42. Polymer nach Punkt 30 oder 41, das eine Pendelhärte nach König von 1-30 s gemessen gemäß DIN 53157 aufweist.
43. Polymer nach Punkt 30 oder 40-42, das eine Bruchdehnung von 10-500% gemessen gemäß DIN 53504 aufweist.

## Patentansprüche

1. Zusammensetzung umfassend:
(i) mindestens ein Präpolymer mit mindestens zwei polymerisierbaren Vinyliden-Gruppen,
(ii) mindestens einen Photoinitiator, und
(iii) mindestens eine Verbindung mit mindestens einer polymerisierbaren Vinyliden-Gruppe,
wobei Komponente (iii) ein gewichtsmittleres Molekulargewicht von 70-800 g/mol, bevorzugt 100-500 g/mol, stärker bevorzugt 100-450 g/mol aufweist.

2. Zusammensetzung nach Anspruch 1, wobei die polymerisierbare Vinyliden-Gruppe in den Komponenten (i) und (iii) jeweils unabhängig voneinander ausgewählt ist aus einer (Meth)acrylatgruppe, Vinylgruppe und Allylgruppe, insbesondere aus einer (Meth)acrylsäure-ester-Gruppe und (Meth)acrylsäure-amid-Gruppe wie einer Crotonsäure-, Itaconsäure-, Fumarsäure-, Maleinsäure-, Acrylamidoglycolsäure- und Methacrylamidoglycolsäure-ester- oder -amid-Gruppe.

3. Zusammensetzung nach einem der vorhergehenden Ansprüche, wobei mindestens ein Präpolymer mit mindestens zwei polymerisierbaren Vinyliden-Gruppen erhältlich ist durch Reaktion eines NCO-Präpolymers (A) mit einer Verbindung (B) umfassend eine polymerisierbare Vinyliden-Gruppe und eine NCO-reaktive Gruppe.

4. Zusammensetzung nach einem der vorhergehenden Ansprüche, wobei mindestens ein Präpolymer mit mindestens zwei polymerisierbaren Vinyliden-Gruppen erhältlich ist durch Reaktion einer Polyolverbindung, wie einem Polyesterpolyol, Polycarbonatpolyol oder Polyetherpolyol, oder einer polyepoxidierten Verbindungen (X1) mit einer vinylidenhaltigen Carbonsäure wie (Meth)acrylsäure, Crotonsäure, Itaconsäure, Fumarsäure, Maleinsäure, Acrylamidoglycolsäure und Methacrylamidoglycolsäure.

5. Zusammensetzung nach einem der vorhergehenden Ansprüche, wobei Komponente (i) ein Polyurethan, ein Polycarbonat, ein Polyether, ein Polyester, ein funktionalisiertes Pflanzenöl oder ein funktionalisiertes Zuckerpolymer, insbesondere ein (cyclo)aliphatisches Polyurethan ggf. mit einer oder mehreren Harnstoffgruppen, mit mindestens zwei polymerisierbaren Vinyliden-Gruppen, insbesondere mindestens zwei (Meth)acrylat-Gruppen, oder eine Mischung davon ist.

6. Zusammensetzung nach einem der vorhergehenden Ansprüche, wobei der Photoinitiator ein Radikalphotoinitiator, insbesondere ausgewählt aus Benzophenonen, Acetophenonen, insbesondere Hydroxyacetophenonen, Thioxanthonen, α-Dicarbonylverbindungen, Phenylglyoxalsäuren, α-Hydroxyketonen, Phosphinoxiden, wie Acylphosphinoxid und Bisacylphosphinoxid, Acylphosphinsulfiden und Germaniumverbindungen oder einer Mischung davon, ist, und der Gehalt an Komponente (ii) in der Zusammensetzung bevorzugt 0,1-15 Gew.-% bezogen auf die Gesamtmasse der Zusammensetzung beträgt.

7. Zusammensetzung nach einem der vorhergehenden Ansprüche, wobei Komponente (iii) eine Viskosität von 1-2.000 mPa·s und bevorzugt 1-500 mPa·s gemessen bei 23°C gemäß DIN 2555 aufweist.

8. Zusammensetzung nach einem der vorhergehenden Ansprüche, wobei mindestens eine Verbindung mit mindestens einer polymerisierbaren Vinyliden-Gruppe der Komponente (iii) ein reaktives Verdünnungsmittel ist.

9. Zusammensetzung nach einem der vorhergehenden Ansprüche, umfassend
(i) mindestens zwei Präpolymere, bevorzugt (cyclo)aliphatische Polyurethane ggf. mit einer oder mehreren Harnstoffgruppen, mit mindestens zwei polymerisierbaren Vinyliden-Gruppen,
(ii) mindestens zwei Photoinitiatoren, und
(iii) mindestens zwei Verbindungen, bevorzugt (cyclo)aliphatische Verbindungen, mit mindestens einer, insbesondere einer, polymerisierbaren Vinyliden-Gruppe, wobei Komponente (iii) ein gewichtsmittleres Molekulargewicht M_{w} von 70-800 g/mol, bevorzugt 100-500 g/mol, stärker bevorzugt 100-450 g/mol aufweist.

10. Zusammensetzung nach einem der vorhergehenden Ansprüche, wobei die Zusammensetzung frei von Wasser und/oder einem organischen Lösungsmittel, insbesondere einem inerten organischen Lösungsmittel wie Alkoholen, z. B. Methanol, Ethanol, Propanol, *iso*-Propanol, Butanol, Pentanol, Hexanol, Carbonsäureestern, z. B. Ethylacetat, *iso*-Propylacetat, Butylacetat, Methoxypropylacetat, Ketonen, wie z. B. Aceton, Methylethylketon, Dibutylketon, Cyclohexanon, Ethern, wie z. B. Diethylether, Ethylenglykolmonoethylether und *tert*-Butylmethylether, Alkanen, wie z. B. *n*-Pentan, *n-*Hexan, *iso*-Hexan, *n*-Heptan, Octan, *iso*-Octan, Spezialbenzin, Leichtbenzin, Petrolether, Cyclohexan, aromatischen Kohlenwasserstoffen wie z. B. Benzol, Toluol, Xylol, Phenol, Nitrobenzol, Anilin, Methylbenzoat, Phenylacetat, halogenierten aliphatischen Kohlenwasserstoffen wie z. B. Dichlormethan, Chloroform, Tetrachlorkohlenstoff und Dimethylformamid, Dimethylsulfoxid, Kohlenstoffdisulfid, Nitroalkane, Diethylphosphat, Sulfolan und Mischungen daraus ist.

11. Polymer, erhältlich durch Bestrahlen der Zusammensetzung nach einem der Ansprüche 1-10.

12. Verwendung der Zusammensetzung nach einem der Ansprüche 1-10 zur Bondierung einer Fasereinheit, insbesondere eines Garns, wie z. B. eines Effektgarns, einfachen Garns, texturierten Garns, gefachten Garns, Spinnfasergarns, Rotorgarns, Dreizylindergarns, Kammgarns, Halbkammgarns, Streichgarns, Schappegarns, Bourettegarns, Filamentgarns wie Multifilgarns und Monofilgarns, eines Zwirns, wie z. B. eines Effektzwirns, einstufigen Zwirns, mehrstufigen Zwirns, Umspinnungszwirns, Endloszwirns, eines Seils, von Fasern, wie z. B. Kurzfasern, Langfasern, Stapelfasern und Faserbündel, und Haspelseide aus natürlichem Material, halbsynthetischen Material, synthetischem Material oder einer Mischung davon.

13. Verfahren zur Bondierung von Fasereinheiten, umfassend die Schritte:
(a) Bereitstellen einer Zusammensetzung nach einem der Ansprüche 1-10,
(b) Applizieren der in Schritt (a) bereitgestellten Zusammensetzung auf mindestens eine Fasereinheit,
(c) Bestrahlen der nach Schritt (b) erhaltenen Fasereinheit mit Strahlung, insbesondere mit einer Wellenlänge im Bereich von 100-450 nm.

14. Fasereinheit erhältlich durch ein Verfahren nach Anspruch 13.

15. Verwendung der Fasereinheit nach Anspruch 14 bei der Verarbeitung von Textilien, insbesondere zur Vernähung von Schuhen, Outdoor-Bekleidung, Jacken, Mäntel, Vorhängen, Markisen, Zeltstoffen, Gardinen, Taschen, oder Rucksäcken, im Automobilbereich, insbesondere bei der Verarbeitung von Airbags, Sitzbezügen, Gurten, Kofferraumabdeckungen, Netzen, Kopfstützen, Armlehnen, Mittelkonsolen, Cabrioverdecken, Isolierungen, Teppichen, Fußmatten, oder bei der Verarbeitung von Teppichböden, Teppichen, Segelstoffen, Bootsplanen, Abdeckplanen und Fischernetzen.
